# EUROPEAN PATENT APPLICATION

(11) **EP 4 738 730 A1**
(43) Date of publication of application: **06.05.2026**
(21) Application number: 24870860.4
(22) Date of filing: 26.09.2024
(51) Int. Cl.: H04B 13/02

(54) **UNDERWATER COMMUNICATION METHOD AND SYSTEM AND RELATED APPARATUS**

(30) Priority: 27.09.2023 CN 202311270413
(71) Applicant: Huawei Technologies Co., Ltd., Shenzhen, Guangdong 518129 (CN)
(72) Inventor: LIU, Guoqing, Shenzhen, Guangdong 518129 (CN); ZHANG, Wei, Shenzhen, Guangdong 518129 (CN); ZHAO, Menglong, Shenzhen, Guangdong 518129 (CN); LU, Shiqiang, Shenzhen, Guangdong 518129 (CN); JIANG, Jin, Shenzhen, Guangdong 518129 (CN); YAN, Wenhao, Shenzhen, Guangdong 518129 (CN)
(74) Representative: Maiwald GmbH
(86) International application number: PCT/CN2024/121365
(87) International publication number: WO 2025/067319

(57) **Abstract**

This application discloses an underwater communication method and system, and a related apparatus. The underwater communication method is applied to a first electronic device. The method includes: receiving a first operation of a user, and in response to the first operation, setting an identity of the first electronic device to a first identity; when the first electronic device is underwater, receiving a second operation of the user, and in response to the second operation, displaying one or more messages, where the one or more messages include a first message; and receiving a third operation of choosing, by the user, to send the first message, and in response to the third operation, sending a first acoustic wave signal, where the first acoustic wave signal carries the first message and the first identity. In this way, underwater communication between electronic devices can be implemented.

## Description

This application claims priority to Chinese Patent Application No. 202311270413.7, filed with the China National Intellectual Property Administration on September 27, 2023 and entitled "UNDERWATER COMMUNICATION METHOD AND SYSTEM, AND RELATED APPARATUS", which is incorporated herein by reference in its entirety.

### TECHNICAL FIELD

This application relates to the communication field, and in particular, to an underwater communication method and system, and a related apparatus.

### BACKGROUND

With continuous development of communication technologies, more electronic devices support underwater communication, which provides great convenience for users who need to perform underwater operations or have underwater sports hobbies such as diving.

When an electronic device worn by the user is in an underwater state, the user may use the electronic device to communicate with another electronic device in a conventional wireless communication manner such as Bluetooth or radio frequency.

However, in water, radio signals attenuate severely, and long-distance underwater communication cannot be implemented.

### SUMMARY

This application provides an underwater communication method and system, and a related apparatus, to implement underwater communication between a plurality of electronic devices. In addition, attenuation of an acoustic wave signal is lower than that of a conventional radio signal in water, and therefore, an underwater communication distance can be increased by using the acoustic wave signal.

According to a first aspect, this application provides an underwater communication method, applied to a first electronic device. The method includes: receiving a first operation of a user, and in response to the first operation, setting an identity of the first electronic device to a first identity; when the first electronic device is underwater, receiving a second operation of the user, and in response to the second operation, displaying one or more messages, where the one or more messages include a first message; and receiving a third operation of choosing, by the user, to send the first message, and in response to the third operation, sending a first acoustic wave signal, where the first acoustic wave signal carries the first message and the first identity.

In this way, underwater communication using acoustic wave signals has a longer propagation distance than a conventional wireless communication manner. In addition, sent information carries an identity, used to notify a receiver of a sender of the information.

In addition, the identity may be an identity set by the user, and the user may also change the identity in different application scenarios. For example, an identity of the user on a first date is a coach, and an identity of the user on a second date is a dive buddy. The user may set the identity to the coach on the first date, and may further change the identity to the dive buddy on the second date. In this way, the user may change, based on an identity change of the user, an identity set in the electronic device, so that a user of the receiver quickly determines the sender of the information based on the identity in the information.

In a possible implementation, before the second operation is received, the method further includes: The first electronic device detects that the first electronic device is underwater.

In a possible implementation, the first operation is an operation of selecting the first identity by the user; and the method further includes: displaying an identity list before receiving the first operation, where the identity list includes a plurality of identities, and the plurality of identities include the first identity.

In this way, the plurality of optional identities can be provided for the user, to facilitate user operations and reduce operation time.

In a possible implementation, the first operation is an operation of inputting the first identity by the user.

In this way, the user may also enter the identity.

In a possible implementation, the first electronic device further includes a first button, and the second operation is an operation performed by the user on the first button.

In this way, underwater, the first electronic device may be triggered via a button (including a crown and the like) to display one or more messages.

In a possible implementation, the first electronic device further includes a second button and a third button; and receiving the third operation of choosing, by the user, to send the first message, and in response to the third operation, sending the first acoustic wave signal specifically includes: receiving an operation performed by the user on the second button, and in response to the operation performed by the user on the second button, displaying a selection indicator on the first message, where the selection indicator indicates to the user that the first message is selected; and receiving an operation performed by the user on the third button, and in response to the operation performed by the user on the third button, sending the first acoustic wave signal.

In this way, underwater, the first electronic device may be triggered via the button (including the crown and the like) to send the first message.

In a possible implementation, the first electronic device may include the first button; the second operation is a press operation performed by the user on the first button; the third operation is a rotation operation performed by the user on the first button; or the third operation is a press operation performed by the user on the first button.

In another possible implementation, in a possible implementation, the first electronic device may include the first button and the second button; the second operation is a press operation performed by the user on the first button; the third operation is a rotation operation performed by the user on the second button; or the third operation is a press operation performed by the user on the second button.

It may be understood that the foregoing plurality of implementations are merely examples. The first electronic device may include one or more buttons, and operation manners of the second operation and the third operation may also be other operation manners. This is not limited in this application.

In a possible implementation, the method further includes: monitoring a first physiological parameter of the user, where the first physiological parameter is any one of the following: body temperature, heart rate, blood pressure, blood oxygen saturation, or central nervous system toxin concentration; and sending a second acoustic wave signal when the first electronic device is underwater and it is obtained through monitoring that the first physiological parameter is outside a first range, where the second acoustic wave signal carries second information and the first identity, and the second information is used to notify a receiver that the first physiological parameter of the user of the first electronic device is abnormal.

In this way, when it is obtained through monitoring that a physiological parameter of the user is abnormal, the first electronic device may be triggered to send information, to notify a companion that the user of the first electronic device encounters an abnormal situation.

In a possible implementation, the method further includes: monitoring a first environmental equipment parameter, where the first environmental equipment parameter is any one of the following: water temperature, water depth, water current speed, ambient light intensity, water pressure, remaining oxygen, remaining safe duration, no-decompression limit, or diving duration; and sending a third acoustic wave signal when the first electronic device is underwater and it is obtained through monitoring that the first environmental equipment parameter is outside a second range, where the third acoustic wave signal carries third information and the first identity, and the third information is used to notify the receiver that the first environmental equipment parameter of the first electronic device is abnormal.

In this way, when it is obtained through monitoring that an environmental equipment parameter is abnormal, the first electronic device may be triggered to send information, to notify the companion that equipment or an environment of the first electronic device is abnormal.

In a possible implementation, the method further includes: monitoring a diving status, where the diving status includes any one or more of the following: ascent, descent, or stop; and sending a fourth acoustic wave signal when the first environmental equipment parameter reaches a first value, where the fourth acoustic wave signal carries fourth information and the first identity, the fourth information includes the first environmental equipment parameter and a first diving status, and the first diving status is a diving status of the first electronic device.

In this way, when it is obtained through monitoring that an environmental equipment parameter reaches a specific value, the first electronic device may be triggered to send the diving status and the environmental equipment parameter together.

In a possible implementation, the method further includes: monitoring a first diving parameter, where the first diving parameter is any one of the following: stop duration, ascent rate, or descent rate; and sending a fifth acoustic wave signal when the first electronic device is underwater and it is obtained through monitoring that the first diving parameter is outside a third range, where the fifth acoustic wave signal carries fifth information and the first identity, and the fifth information is used to notify the receiver that the first diving parameter of the first electronic device is abnormal.

In this way, when it is obtained through monitoring that a diving parameter is abnormal, the first electronic device may be triggered to send information, to notify the companion that the user of the first electronic device encounters an abnormal situation.

It may be understood that the foregoing plurality of implementations are merely examples. In some possible implementations, the first electronic device may also send a specific message when detecting that any one or more of parameters such as the physiological parameter, the environmental equipment parameter, the diving status, and the diving parameter meet a specific condition. This is not limited in this application.

In a possible implementation, the first acoustic wave signal further carries a first group identifier, and the first group identifier indicates that the first electronic device belongs to a first group; and the method further includes: before receiving the second operation, receiving a fourth operation of joining the first group by the user; broadcasting the first group identifier and the first identity in response to the fourth operation; receiving the first group identifier and a second identity that are sent by a second electronic device, where the second identity is an identity of the second electronic device; and displaying a member list of the first group, where the member list includes the first identity and the second identity.

In this way, electronic devices in a same group can communicate with each other.

In a possible implementation, the first acoustic wave signal further carries a first group identifier, and the first group identifier indicates that the first electronic device belongs to a first group. The method further includes: before receiving the second operation, receiving a fifth operation of creating the first group by the user; broadcasting the first group identifier and the first identity in response to the fifth operation; receiving the first group identifier and the second identity that are sent by the second electronic device, where the second identity is an identity of the second electronic device; and broadcasting the first group identifier and a member list of the first group, where the member list includes the first identity and the second identity.

In this way, the first electronic device may create the first group, and determine, in response to a group creation operation, that the first electronic device is a central device of the group. The central device may broadcast the member list of the group after updating the member list.

In some other possible implementations, the first electronic device may also determine, based on any one or more of the identity (for example, the coach) of the first electronic device, a device endurance capability (for example, a battery level), a time sequence of joining the group, and the like, that the first electronic device is the central device of the group. This is not limited in this application.

In a possible implementation, the method further includes: displaying sixth information and the second identity when receiving a sixth acoustic wave signal sent by the second electronic device, where the sixth acoustic wave signal carries the sixth information, the first group identifier, and the second identity; and skipping displaying seventh information when receiving a seventh acoustic wave signal sent by a third electronic device, where the seventh sound carries the seventh information and a third identity, the third identity is an identity of the third electronic device, and the third electronic device does not belong to the first group.

In this way, when a message sent by an electronic device that does not belong to a same group is received, the message may not be displayed.

In a possible implementation, the method further includes: sending an eighth acoustic wave signal at a first moment when the first electronic device is underwater, where the eighth acoustic wave signal carries the first identity and the first moment; receiving, at a second moment, a ninth acoustic wave signal sent by the second electronic device, where the ninth acoustic wave signal is an acoustic wave signal sent by the second electronic device when the second electronic device receives the eighth acoustic wave signal, and the ninth acoustic wave signal carries a transmission moment of the ninth acoustic wave signal and the second identity of the second electronic device; and in response to the ninth acoustic wave signal, outputting distance information based on the transmission moment of the ninth acoustic wave signal and the second moment, where the distance information indicates a distance between the first electronic device and the second electronic device.

In this way, the first electronic device may determine the distance between the first electronic device and the second electronic device in real time, to facilitate determining a distance between the first electronic device and the companion, and improve diving safety.

In a possible implementation, before sending the eighth acoustic wave signal, the method further includes: The first electronic device receives an operation of enabling a distance monitoring function by the user, and in response to the operation, enables the distance monitoring function.

In this way, after the distance monitoring function is enabled, the first electronic device may monitor the distance between the first electronic device and the second electronic device in real time.

In another possible implementation, the first electronic device can monitor the distance between the first electronic device and the second electronic device in real time without a manual operation of the user.

In a possible implementation, the method further includes: sending an eighth acoustic wave signal at a first moment when the first electronic device is underwater, where the eighth acoustic wave signal carries the first identity; receiving, at a second moment, a ninth acoustic wave signal sent by the second electronic device, where the ninth acoustic wave signal is an acoustic wave signal sent by the second electronic device when the second electronic device receives the eighth acoustic wave signal, and the ninth acoustic wave signal carries the second identity of the second electronic device; sending a tenth acoustic wave signal at a third moment, where the tenth acoustic wave signal carries the first identity; receiving, at a fourth moment, an eleventh acoustic wave signal sent by the second electronic device, where the eleventh acoustic wave signal is an acoustic wave signal sent by the second electronic device when the second electronic device receives the tenth acoustic wave signal, and the eleventh acoustic wave signal carries the second identity of the second electronic device; and outputting a distance prompt based on a first time interval and a second time interval, where the distance prompt prompts the user with a change of a distance between the first electronic device and the second electronic device, the first time interval is a time interval between the first moment and the second moment, and the second time interval is a time interval between the third moment and the fourth moment.

In this way, the first electronic device may determine a change of the distance between the first electronic device and the second electronic device in real time, thereby improving diving safety.

In a possible implementation, outputting the distance prompt based on the first time interval and the second time interval specifically includes: outputting a first distance prompt when the first time interval is greater than the second time interval, where the first distance prompt indicates to the user that the distance between the first electronic device and the second electronic device decreases; and outputting a second distance prompt when the first time interval is less than the second time interval, where the second distance prompt indicates to the user that the distance between the first electronic device and the second electronic device increases.

In this way, a distance prompt may be output in real time, to indicate whether a distance between two electronic devices increases or decreases.

In a possible implementation, the method further includes: displaying a first prompt before receiving the first operation, where the first prompt indicates to the user that no identity is set for the first electronic device; and receiving the first operation of the user, and in response to the first operation, setting the identity of the first electronic device to the first identity specifically includes: receiving the first operation of the user, and in response to the first operation, displaying a second prompt, where the second prompt indicates to the user that the identity of the first electronic device is the first identity.

In this way, the first electronic device may set the identity based on an operation of the user.

According to a second aspect, this application provides an underwater communication method, applied to a buoy device, where the buoy device stores first location information, and the first location information indicates a location of the buoy device. The method includes: receiving, at a fifth moment, a twelfth acoustic wave signal sent by a first electronic device from underwater, where the twelfth acoustic wave signal carries a first identity of the first electronic device and a first transmission moment, and the first transmission moment is a transmission moment of the twelfth acoustic wave signal; determining second location information based on the fifth moment, the first transmission moment, and the first location information, where the second location information indicates a location of the first electronic device; and sending a first radio signal to a second electronic device that does not enter water, where the first radio signal includes the second location information.

In this way, location information of an underwater electronic device may be sent to an onshore electronic device through the buoy device, so that the onshore electronic device determines a location of the underwater electronic device.

In a possible implementation, the method further includes: sending a thirteenth acoustic wave signal to the first electronic device after determining the second location information, where the thirteenth acoustic wave signal carries the second location information.

In this way, the buoy device may also send location information of the first electronic device to the first electronic device, so that a user of the first electronic device determines a location of the user.

According to a third aspect, this application provides an electronic device. The electronic device is a first electronic device and includes one or more processors, one or more memories, a display, and a sound-making module. The one or more memories are coupled to the one or more processors. The one or more memories are configured to store computer program code. The computer program code includes computer instructions. When the one or more processors execute the computer instructions, the first electronic device is caused to perform the underwater communication method according to any possible implementation of any one of the foregoing aspects.

In a possible implementation, the sound-making module is attached to a rear housing of the first electronic device, and the sound-making module is configured to drive the rear housing to vibrate and send an acoustic wave signal.

In this way, the acoustic wave signal may be directly propagated to the water through vibration of the rear housing, thereby reducing a transmission loss.

According to a fourth aspect, an embodiment of this application provides a computer storage medium, including computer instructions. When the computer instructions are run on a first electronic device, the first electronic device is caused to perform the underwater communication method according to any possible implementation of any one of the foregoing aspects.

According to a fifth aspect, an embodiment of this application provides a computer program product. When the computer program product is run on a first electronic device, the first electronic device is caused to perform the underwater communication method according to any possible implementation of any one of the foregoing aspects.

For beneficial effects of the third aspect to the fifth aspect, refer to the beneficial effects of the first aspect.

According to a sixth aspect, this application provides a buoy device, including one or more processors and one or more memories. The one or more memories are coupled to the one or more processors. The one or more memories are configured to store computer program code. The computer program code includes computer instructions. When the one or more processors execute the computer instructions, the buoy device is caused to perform the underwater communication method according to any possible implementation of the second aspect.

According to a seventh aspect, an embodiment of this application provides a computer storage medium, including computer instructions. When the computer instructions are run on a buoy device, the buoy device is caused to perform the underwater communication method according to any possible implementation of the second aspect.

According to an eighth aspect, an embodiment of this application provides a computer program product. When the computer program product is run on a buoy device, the buoy device is caused to perform the underwater communication method according to any possible implementation of the second aspect.

For beneficial effects of the sixth aspect to the eighth aspect, refer to the beneficial effects of the second aspect.

### BRIEF DESCRIPTION OF DRAWINGS

FIG. 1A is a diagram of a system architecture of an underwater communication system 10 according to an embodiment of this application;
FIG. 1B is a diagram of a hardware structure of an electronic device 100 according to an embodiment of this application;
FIG. 1C is a diagram of a connection relationship between a receiving module and a transmitting module for an acoustic wave signal according to an embodiment of this application;
FIG. 1D is a diagram of a location relationship of a sound-making module 170D in an electronic device 100 according to an embodiment of this application;
FIG. 1E is a diagram of another location relationship of a sound-making module 170D in an electronic device 100 according to an embodiment of this application;
FIG. 1F is a diagram of a relationship between deformation of a sound-making module 170D and a waveform of a generated acoustic wave signal according to an embodiment of this application;
FIG. 2A to FIG. 2F are diagrams of a group of interfaces for setting an identity of an electronic device 100 according to an embodiment of this application;
FIG. 3A to FIG. 3F are diagrams of a group of interfaces for sending information by an electronic device 100 underwater according to an embodiment of this application;
FIG. 4A to FIG. 4E are diagrams of a group of interfaces for joining/leaving a group by an electronic device 100 according to an embodiment of this application;
FIG. 5A to FIG. 5F are diagrams of a group of interfaces for setting an information sending condition on an electronic device 100 according to an embodiment of this application;
FIG. 5G is a diagram of an interface for receiving an acknowledgement message by an electronic device 100 according to an embodiment of this application;
FIG. 5H is a diagram of an interface for outputting a distance change prompt by an electronic device 100 according to an embodiment of this application;
FIG. 6A is a schematic flowchart of an underwater communication method according to an embodiment of this application;
FIG. 6B is a diagram of a structure of an acoustic wave signal according to an embodiment of this application;
FIG. 6C is a diagram of a waveform of an acoustic wave signal according to an embodiment of this application;
FIG. 7 is a schematic flowchart of receiving, by an electronic device 200 underwater, target information sent by an electronic device 100 according to an embodiment of this application;
FIG. 8 is a schematic flowchart of joining a group by an electronic device 100 according to an embodiment of this application;
FIG. 9 is another schematic flowchart of joining a group by an electronic device 100 according to an embodiment of this application;
FIG. 10 is a schematic flowchart of a method for determining a change of a distance between an electronic device 100 and an electronic device 200 based on underwater communication according to an embodiment of this application;
FIG. 11 is a diagram of functional modules of an electronic device 100 according to an embodiment of this application;
FIG. 12 is a diagram of a system architecture of an underwater communication system 20 according to an embodiment of this application;
FIG. 13 is a schematic flowchart of an underwater communication method according to an embodiment of this application; and
FIG. 14 is a schematic flowchart of another underwater communication method according to an embodiment of this application.

### DESCRIPTION OF EMBODIMENTS

The following clearly describes the technical solutions in embodiments of this application in detail with reference to the accompanying drawings. In descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "multiple" means two or more.

The following terms "first" and "second" are merely intended for a purpose of description, and shall not be understood as an implication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

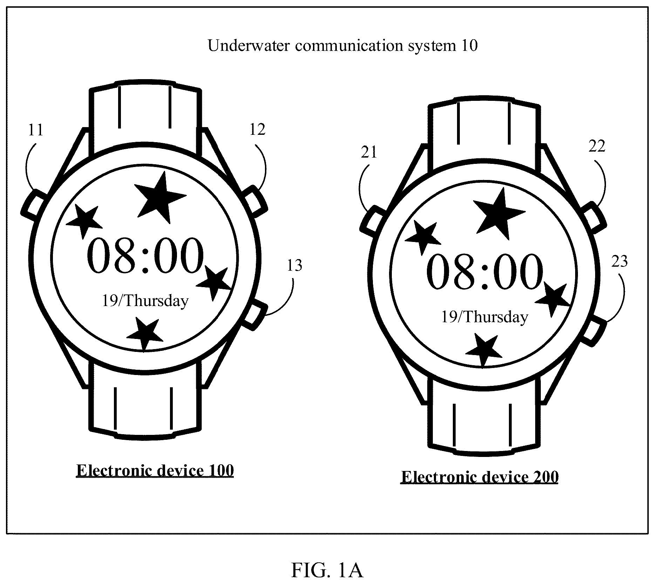

FIG. 1A is a diagram of an architecture of an underwater communication system 10 according to an embodiment of this application.

As shown in FIG. 1A, the underwater communication system 10 may include an electronic device 100 and an electronic device 200.

The electronic device 100 may include one or more buttons, for example, a button 11, a button 12, and a button 13. In some embodiments, the button 11 may be disposed at the 10 o'clock orientation of the electronic device 100, the button 12 may be disposed at the 2 o'clock orientation of the electronic device 100, and the button 13 may be disposed at the 4 o'clock orientation of the electronic device 100. The electronic device 200 may also include one or more buttons, for example, a button 21, a button 22, and a button 23. For related descriptions of the buttons of the electronic device 200, refer to related descriptions of the buttons of the electronic device 100. Details are not described herein again. After the electronic device 100 and the electronic device 200 enter water, a user may perform operations such as sending and viewing information via a button.

When both the electronic device 100 and the electronic device 200 are underwater, the electronic device 100 and the electronic device 200 may implement underwater communication by using an underwater acoustic carrier communication technology. The electronic device 100 may generate, by using a buzzer, an acoustic wave signal carrying information, and propagate the acoustic wave signal to surroundings by using water as a propagation medium. The electronic device 200 may receive, through a microphone or a sound pickup sensor, the acoustic wave signal carrying the information, to implement underwater communication between the electronic device 100 and the electronic device 200. It may be understood that the electronic device 200 may also send information to the electronic device 100 in the foregoing manner. The acoustic wave signal may include an ultrasonic signal, a subsonic signal, and an acoustic wave signal that can be heard by human ears. A frequency range of the acoustic wave signal is not limited in embodiments of this application.

In some embodiments, when neither the electronic device 100 nor the electronic device 200 is underwater, the electronic device 100 and the electronic device 200 may communicate with each other in a wireless communication manner like Bluetooth or a wireless local area network. This is not limited in this application.

It may be understood that the embodiment shown in FIG. 1A is merely an example. In embodiments of this application, the underwater communication system 10 may further include more electronic devices. In addition, the electronic device 100 (or the electronic device 200) may also include more or fewer buttons, and a location of the button may also be a location different from that in the foregoing embodiment. This is not limited in this application.

It should be noted that the electronic device 100 and the electronic device 200 may be watches shown in FIG. 1A, or may be other wearable devices such as a band and smart glasses. Specific types and device forms of the electronic device 100 and the electronic device 200 are not limited in embodiments of this application.

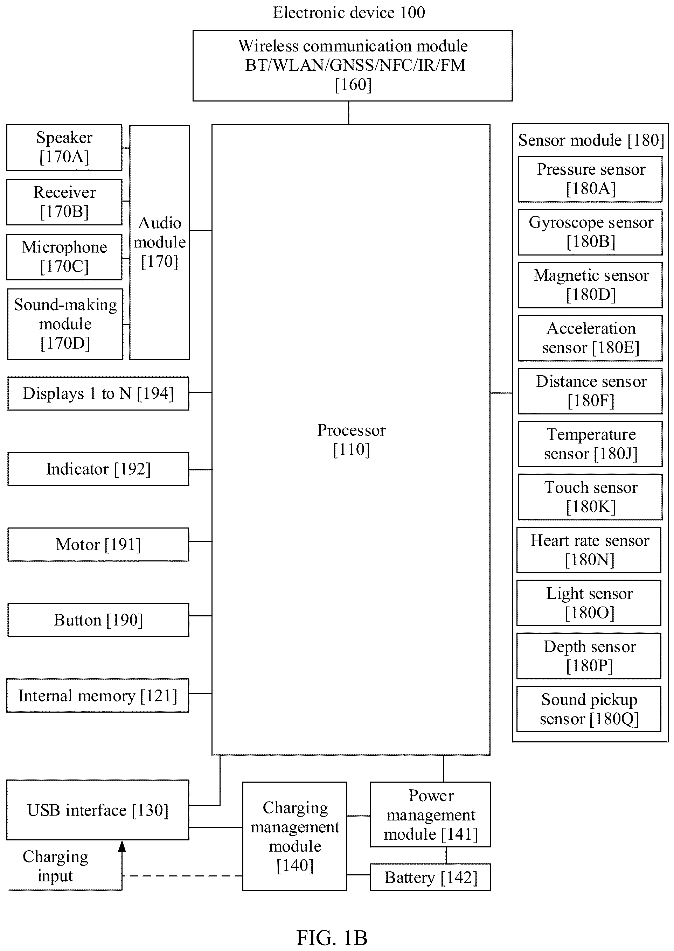

FIG. 1B is a diagram of a hardware structure of the electronic device 100.

The electronic device 100 may be a wearable device like a watch, a band, or smart glasses. A specific type of the electronic device is not specifically limited in embodiments of this application.

The electronic device 100 may include a processor 110, an internal memory 121, a universal serial bus (universal serial bus, USB) interface 130, a charging management module 140, a power management module 141, a battery 142, an audio module 170, a speaker 170A, a receiver 170B, a microphone 170C, a sound-making module 170D, a sensor module 180, a button 190, a motor 191, an indicator 192, a display 194, and the like. Optionally, the electronic device 100 may further include a wireless communication module 160 and the like. The sensor module 180 may include one or more sensors, for example, a pressure sensor 180A, a temperature sensor 180J, a touch sensor 180K, a heart rate sensor 180N, a light sensor 1800, and a depth sensor 180P. Optionally, the sensor module 180 may further include any one or more of a gyroscope sensor 180B, a magnetic sensor 180D, an acceleration sensor 180E, a distance sensor 180F, a sound pickup sensor 180Q, and the like.

It may be understood that the structure shown in this embodiment of the present invention does not constitute a specific limitation on the electronic device 100. In some other embodiments of this application, the electronic device 100 may have more or fewer components than those shown in the figure, or have some components that are combined, or have some components that are split, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

The wireless communication module 160 may provide a wireless communication solution that is applied to the electronic device 100 and that includes any one or more of a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 may receive an electromagnetic wave through an antenna, performs frequency demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD). The display panel may be further manufactured by using an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The internal memory 121 may include one or more random access memories (random access memories, RAMs) and one or more nonvolatile memories (nonvolatile memories, NVMs). The random access memory may be directly read and written by the processor 110. The random access memory may be configured to store executable programs (for example, machine instructions) in an operating system or another running program, and may be configured to store data of a user, data of an application, and the like. The nonvolatile memory may also store the executable programs, the data of the user and the application, and the like, and may be loaded into the random access memory in advance, to be directly read and written by the processor 110.

The audio module 170 may include a speaker 170A, a receiver 170B, a microphone 170C, a sound-making module 170D, and the like. The electronic device 100 may implement an audio function through the audio module 170, the speaker 170A, the receiver 170B, the microphone 170C, the sound-making module 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into an acoustic wave signal.

The receiver 170B, also referred to as an "earpiece", is configured to convert an audio electrical signal into an acoustic wave signal.

The microphone 170C, also referred to as a "mike" or a "mic", is configured to convert an acoustic wave signal into an electrical signal. At least one microphone 170C may be disposed in the electronic device 100. In some other embodiments, two microphones 170C may be disposed in the electronic device 100, to capture an acoustic wave signal and implement a noise reduction function. In some other embodiments, three, four, or more microphones 170C may alternatively be disposed in the electronic device 100, to capture an acoustic wave signal, reduce noise, further recognize a sound source, implement a directional recording function, and the like. In embodiments of this application, the microphone 170C may be configured to capture an acoustic wave signal transmitted by another electronic device.

The sound-making module 170D may be configured to convert an electrical signal into a sound signal. In embodiments of this application, the sound-making module 170D is configured to generate an acoustic wave signal carrying information. The sound-making module 170D may include a sensor like a moving coil sensor or a piezoelectric sensor that can implement electro-acoustic conversion. In some embodiments, the sound-making module 170D may include a buzzer. In some other embodiments, the sound-making module 170D may include a sound-making component made of a piezoelectric material, for example, a piezoelectric sheet. The piezoelectric sheet may be in a ring shape, a semicircular ring shape, or another shape. This is not limited in this application.

The pressure sensor 180A is configured to sense a pressure signal, and can convert the pressure signal into an electrical signal. In some embodiments, the pressure sensor 180A may be disposed on the display 194. In some embodiments, the pressure sensor 180A may be further configured to measure a physiological parameter (for example, a blood pressure) of the user. In some other embodiments, the pressure sensor 180A may be configured to measure a water pressure, and determine a depth at which the user dives based on a relationship between a water pressure and a water depth.

The gyroscope sensor 180B may be configured to determine a motion posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during shooting. For example, when the shutter is pressed, the gyroscope sensor 180B detects an angle at which the electronic device 100 shakes, and calculates, based on the angle, a distance for which a lens module needs to compensate, so that the lens cancels the shake of the electronic device 100 through reverse motion, to implement image stabilization. The gyroscope sensor 180B may be further used in a navigation scenario and a motion-sensing game scenario.

The magnetic sensor 180D includes a Hall effect sensor. The electronic device 100 may detect a magnetic field by using the magnetic sensor 180D.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in a shooting scenario, the electronic device 100 may measure a distance through the distance sensor 180F to implement quick focusing.

The temperature sensor 180J is configured to detect a temperature. The temperature sensor 180J may include a body temperature sensor and a water temperature sensor. The body temperature sensor is configured to monitor a body temperature of the user. The water temperature sensor may be configured to monitor a water temperature. In some embodiments, the temperature sensor may be further configured to monitor a temperature of the electronic device 100.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may also be disposed on a surface of the electronic device 100 at a location different from that of the display 194.

The heart rate sensor 180N may be configured to monitor a heart rate of the user.

The light sensor 1800, also referred to as an ambient light sensor, is configured to sense ambient light brightness. In this embodiment of this application, the electronic device 100 may determine, based on the ambient light brightness detected by the light sensor 1800, an environment in which the user is located.

The depth sensor 180P may be configured to detect a depth of the electronic device 100 underwater.

The sound pickup sensor 180Q may be configured to capture an acoustic wave signal, so that the electronic device 100 identifies carried information from the captured acoustic wave signal. The sound pickup sensor 180Q may be an acoustic-electric sensor like a moving coil sensor, a capacitive sensor, or a piezoelectric sensor.

The button 190 includes a power button, a volume button, a crown, and the like. The button 190 may be a mechanical button, or may be a touch button. The electronic device 100 may receive a button input, and generate a button signal input related to a user setting and function control of the electronic device 100. In this embodiment of this application, the button 190 may include the button 11, the button 12, the button 13, and the like shown in FIG. 1A.

The motor 191 may generate a vibration prompt. The motor 191 may be configured to provide an incoming information vibration prompt and a touch vibration feedback. When receiving different types of information, the motor 191 may also correspond to different vibration feedback effects. The vibration feedback effect can also be customized.

The indicator 192 may be an indicator light, and may be configured to indicate a charging status and a power change, or may be configured to indicate a message, a notification, and the like.

In this embodiment of this application, for a hardware structure of the electronic device 200 and a hardware structure of another electronic device in the underwater communication system 10, refer to related descriptions of the hardware structure of the electronic device 100 shown in FIG. 1B. Details are not described herein again.

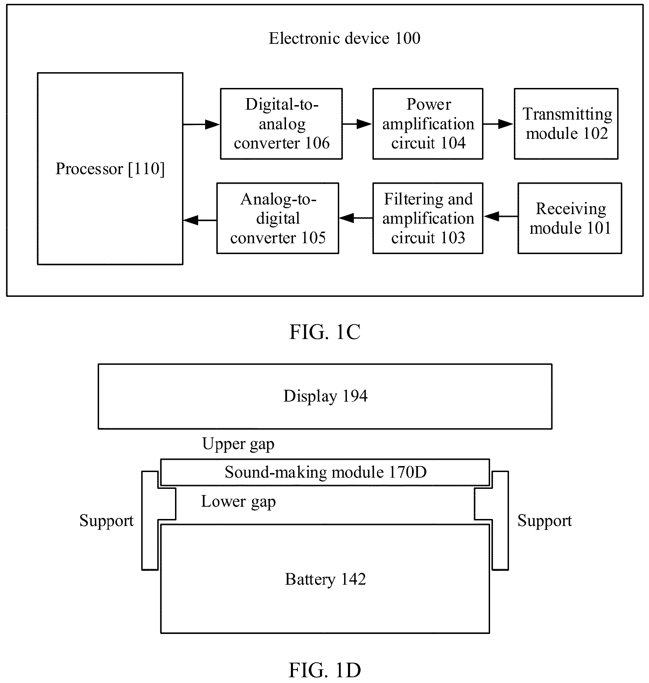

FIG. 1C is a diagram of a connection relationship between a receiving module and a transmitting module for an acoustic wave signal according to an embodiment of this application.

As shown in FIG. 1C, the electronic device 100 may include the processor 110, a receiving module 101, a transmitting module 102, a filtering and amplification circuit 103, a power amplification circuit 104, an analog-to-digital converter 105, a digital-to-analog converter 106, and the like.

The receiving module 101 may capture an acoustic wave signal, and the receiving module 101 may include a sensor like a moving coil sensor or a piezoelectric sensor that can implement acoustic-electric conversion. For example, the receiving module 101 may include any one or more of the following: the microphone 170C, the sound pickup sensor 180Q, and the like. The receiving module 101 may convert the captured acoustic wave signal into an electrical signal, and send the electrical signal to the filtering and amplification circuit 103.

The filtering and amplification circuit 103 may filter and amplify the electrical signal sent by the receiving module 101, to be specific, filter a noise signal, amplify an electrical signal obtained through filtering, and send a processed electrical signal to the analog-to-digital converter 105.

The analog-to-digital converter 105 may receive the electrical signal sent by the filtering and amplification circuit 103, convert the electrical signal (namely, an analog signal) into a digital signal, and send the digital signal to the processor 110.

The processor 110 may receive the digital signal sent by the analog-to-digital converter 105, and determine, based on the digital signal, information and an identity that are carried in the received acoustic wave signal. After determining to-be-sent information, the processor 110 may further encode the information and an identity of the electronic device 100, to obtain a digital signal corresponding to target information, and send the digital signal corresponding to the target information to the digital-to-analog converter 106.

The digital-to-analog converter 106 may receive the digital signal sent by the processor 110, and convert the digital signal into an analog signal, namely, an electrical signal corresponding to the digital signal. Then, the digital-to-analog converter 106 may send the converted electrical signal to the power amplification circuit 104.

After receiving the electrical signal sent by the digital-to-analog converter 106, the power amplification circuit 104 may amplify the electrical signal, and send a processed electrical signal to the transmitting module 102.

The transmitting module 102 may include a sensor like a moving coil sensor or a piezoelectric sensor that can implement electro-acoustic conversion. The transmitting module 102 may receive the electrical signal sent by the power amplification circuit 104, convert the electrical signal into an acoustic wave signal, and then propagate the acoustic wave signal outward. In some embodiments, a transmitting driver circuit may be disposed in the transmitting module 102, and the transmitting driver circuit is configured to drive the transmitting module 102 to transmit an acoustic wave signal. In some other embodiments, the transmitting driver circuit may alternatively be disposed outside the transmitting module 102, is connected to the transmitting module 102, and is configured to drive the transmitting module 102 to transmit an acoustic wave signal.

In some embodiments, the transmitting module 102 and the receiving module 101 may alternatively share a same module, and implement signal transmission or reception in a half-duplex manner. This is not limited in this application.

It should be noted that, for a connection relationship between a receiving module and a transmitting module for an acoustic wave signal in each of the electronic device 200 and another electronic device in the underwater communication system 10, refer to the embodiment shown in FIG. 1C. Details are not described herein again.

FIG. 1D is a diagram of a location relationship of the sound-making module 170D in the electronic device 100 according to an embodiment of this application.

As shown in FIG. 1D, the sound-making module 170D and the battery 142 may be sequentially disposed below the display 194. The sound-making module 170D may be fastened between the display 194 and the battery 142 by using a support. The sound-making module 170D and the battery 142 may be respectively fastened (for example, adhered) to the upper part and the lower part of the support. There is a gap (also referred to as an upper gap) between the sound-making module 170D and the display 194, and there is a gap (also referred to as a lower gap) between the sound-making module 170D and the battery 142. The upper gap and the lower gap may reserve space for the sound-making module 170D to vibrate up and down. In addition, because the battery expands after long-term use, the lower gap may further reserve expansion space for the battery. A material of the support may be an insulating material, or a surface of the support may be insulated. The support may have a ring (or another shape like a rectangle) structure, and a specific shape of the support may be determined by shapes of the battery 142 and the sound-making module 170D.

In this way, vibration space is reserved above and below the sound-making module 170D, to help the sound-making module 170D vibrate and make a sound.

In the embodiment shown in FIG. 1D, the sound-making module 170D may be a buzzer.

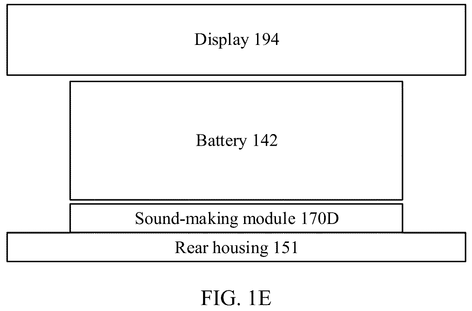

FIG. 1E is a diagram of another location relationship of the sound-making module 170D in the electronic device 100 according to an embodiment of this application.

As shown in FIG. 1E, the sound-making module 170D may be disposed between a rear housing 151 and the battery 142 of the electronic device 100. The battery 142 may be disposed below the display 194. The rear housing 151 is a housing on a side that is close to the skin of the user when the electronic device 100 is worn by the user. The sound-making module 170D may be closely attached to the rear housing 151.

When the electronic device 100 is underwater and the sound-making module 170D vibrates and makes a sound, because the rear housing 151 and the sound-making module 170D are attached to each other, the sound-making module 170D may drive the rear housing 151 to vibrate together, to propagate an acoustic wave signal into water, and then propagate the acoustic wave signal to another electronic device through the water.

In this way, the sound-making module 170D may directly propagate the acoustic wave signal to the water by driving the rear housing 151 to vibrate, and does not need to: propagate the generated acoustic wave signal to the housing through gas inside the housing, and then propagate the acoustic wave signal to the water through the housing. This shortens a propagation path of the acoustic wave signal and improves propagation efficiency.

In the embodiment shown in FIG. 1E, the sound-making module 170D may be a piezoelectric sheet made of a piezoelectric material. The piezoelectric sheet may have different shapes. For example, if a watch body of the electronic device 100 is circular, the piezoelectric sheet may be ring-shaped. In this case, a sensor may be disposed at a location in the ring, and the sensor may be configured to monitor a physiological parameter like a heart rate of the user. It may be understood that the ring-shaped piezoelectric sheet herein is merely an example. In embodiments of this application, the piezoelectric sheet may alternatively be in a square frame shape, or may be in a semicircle shape, a semicircular ring shape, or the like. This is not limited in this application.

It may be understood that the embodiments shown in FIG. 1D and FIG. 1E are merely two examples. In embodiments of this application, the sound-making module 170D may alternatively be disposed at another location in the electronic device 100. This is not limited in this application. In addition, the sound-making module 170D and other related components provided in embodiments of this application are compact and easy to integrate into a small electronic device, to help the user wear the electronic device.

In some embodiments, if a location relationship between the sound-making module 170D and each component of the electronic device 100 is the location relationship shown in FIG. 1E, the transmitting module or the receiving module may be integrated with a structural housing like the rear housing 151 by using an adhesive process or an injection molding process. Optionally, in this case, the transmitting module and the receiving module may alternatively share a same module, and implement signal transmission or reception in a half-duplex manner.

The following describes a relationship between vibration of the sound-making module 170D and a waveform of a generated sound.

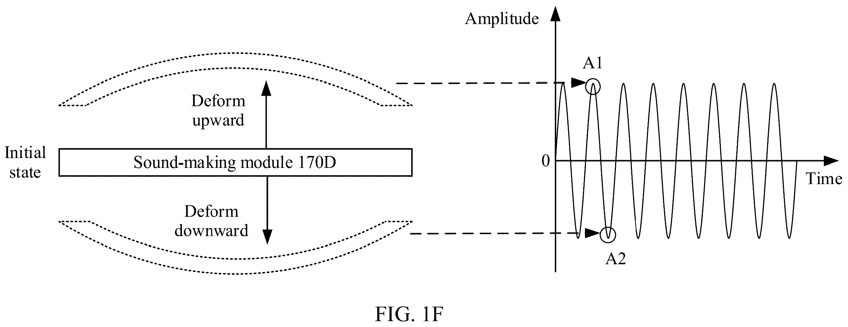

As shown in FIG. 1F, a location of the sound-making module 170D when the sound-making module 170D does not vibrate may be referred to as an initial location. In a vibration and sound-making process, the sound-making module 170D may deform upward or downward. A waveform of an acoustic wave signal generated through vibration of the sound-making module 170D may be a curve C1 in a two-dimensional coordinate system shown in FIG. 1F. In the two-dimensional coordinate system, the horizontal axis may represent time, the vertical axis may represent amplitude, and the curve C1 may represent the waveform of the acoustic wave signal. The waveform of the acoustic wave signal may be related to a deformation direction and a deformation degree of the sound-making module 170D.

One period of the curve C1 is used as an example. The curve C1 may include a peak point A1 and a valley point A2 in this period. An amplitude of the peak point A1 is a maximum amplitude of the acoustic wave signal, and an amplitude corresponding to the valley point A2 is a minimum amplitude of the acoustic wave signal. In this time period, the peak point A1 may be generated when the sound-making module 170D is deformed upward to the highest location, and the valley point A2 may be generated when the sound-making module 170D is deformed downward to the lowest location. The higher highest location of the sound-making module 170D indicates a greater amplitude of the peak point A1, and the lower lowest location of the sound-making module 170D indicates a greater absolute value of the amplitude of the valley point A2.

It may be understood that FIG. 1F merely illustrates a correspondence between both a vibration direction and an amplitude of the sound-making module 170D and a waveform of a generated acoustic wave signal. In embodiments of this application, the waveform of the acoustic wave signal may alternatively be a waveform different from that in the foregoing embodiment. This is not limited in this application.

Embodiments of this application provide an underwater communication method. The underwater communication method is applied to the electronic device 100. The method includes: receiving a first operation of a user, and in response to the first operation of the user, setting an identity of the electronic device 100 to a first identity; when the electronic device 100 is underwater, receiving a second operation of the user, and in response to the second operation of the user, displaying one or more messages, where the one or more messages include a first message; and receiving a third operation of choosing, by the user, to send the first message, and in response to the third operation, sending a first acoustic wave signal, where the first acoustic wave signal carries the first message and the first identity.

In this way, an acoustic wave signal may be used as an information carrier to implement underwater communication. In addition, attenuation of the acoustic wave signal during underwater propagation is low, and a propagation distance is greater than a distance of conventional wireless communication.

The following describes diagrams of a group of interfaces for enabling an underwater communication function and setting an identity according to an embodiment of this application.

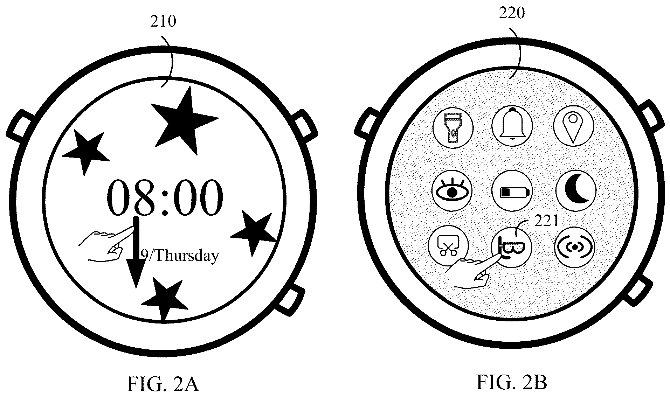

For example, as shown in FIG. 2A, the electronic device 100 may display a home screen 210, and a time, for example, "08:00", may be displayed in the home screen 210.

The electronic device 100 may receive a swipe down operation performed by the user on the home screen 210, and in response to the swipe down operation, display a drop-down menu 220 shown in FIG. 2B. The drop-down menu 220 may include one or more controls, for example, a do-not-disturb control, a location control, and an underwater communication control 221.

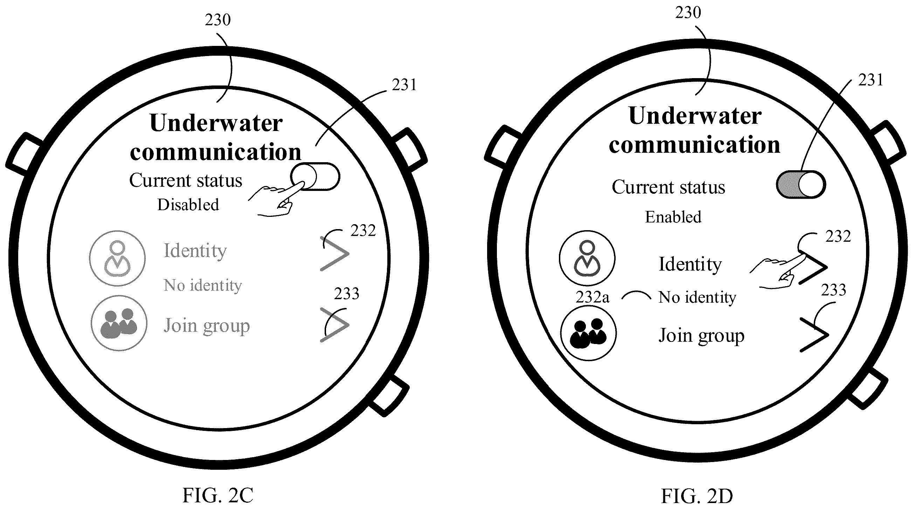

The electronic device 100 may receive a tap operation performed by the user on the underwater communication control 221, and in response to the tap operation, display an underwater communication interface 230 shown in FIG. 2C.

As shown in FIG. 2C, the underwater communication interface 230 may include an enable switch 231, and the enable switch 231 may be configured to enable or disable an underwater communication function of the electronic device 100. The enable switch 231 may have two states: an enabled state and a disabled state, and a status of the enable switch 231 may indicate to the user whether the underwater communication function is enabled. In the embodiment shown in FIG. 2C, the status of the enable switch 231 is disabled, indicating that the underwater communication function is disabled on the electronic device 100 currently. The underwater communication interface 230 may further include one or more setting entries, for example, an identity entry 232 and a join group entry 233. In some embodiments, if the enable switch 231 is in the disabled state, the one or more setting entries (including the identity entry 232, the join group entry 233, and the like) may be in a grayed-out state. In the grayed-out state, the one or more setting entries cannot trigger the electronic device 100 to display corresponding interfaces. In some other embodiments, if the enable switch 231 is in the disabled state, the one or more setting entries may be displayed in the underwater communication interface 230. This is not limited in this application.

The electronic device 100 may receive a tap operation performed by the user on the enable switch 231, and in response to the tap operation, as shown in FIG. 2D, switch the status of the enable switch 231 from the disabled state to the enabled state. After the enable switch 231 is enabled, the one or more setting entries in the underwater communication interface 230 may be restored from the grayed-out state to a normal state. In the normal state, the one or more setting entries can trigger the electronic device 100 to display the corresponding interfaces. The identity entry 232 may be used to trigger the electronic device 100 to set an identity of the electronic device 100. An identity prompt 232a, for example, text "No identity", may be further displayed in the identity entry 232, to indicate to the user that no identity is currently set. In some other embodiments, regardless of whether the enable switch 231 is in the enabled state, the one or more setting entries may be displayed in the underwater communication interface 230, and the one or more setting entries are all in the normal state.

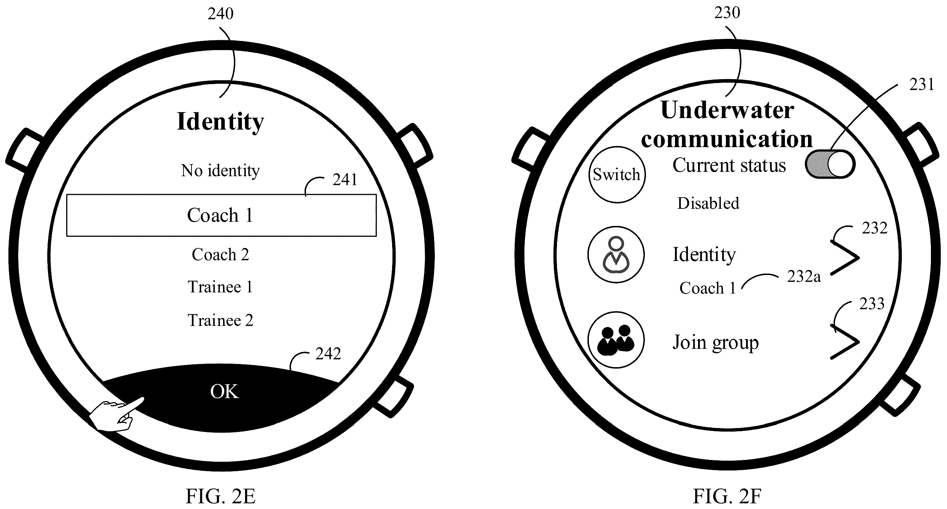

The electronic device 100 may receive a tap operation performed by the user on the identity entry 232, and in response to the tap operation, display an identity selection interface 240 shown in FIG. 2E.

As shown in FIG. 2E, one or more identities, for example, coach 1, coach 2, trainee 1, and trainee 2, may be displayed in the identity selection interface 240. In FIG. 2E, a selection indicator 241 is displayed on "Coach 1", and the selection indicator 241 may be a rectangular box, or may be another graph, pattern, or the like. The selection indicator 241 may indicate to the user that a currently selected identity is "Coach 1". It should be noted that the electronic device 100 may receive a swipe operation performed by the user on the identity selection interface 240 (or an operation performed by the user on a button), and in response to the swipe operation, switch the selected identity. The identity selection interface 240 may further include an OK control 242. The OK control 242 is used to trigger the electronic device 100 to set the currently selected identity as the identity of the electronic device 100.

The electronic device 100 may receive a tap operation performed by the user on the OK control 242, and in response to the tap operation, set the currently selected identity coach 1 as the identity of the electronic device 100, and display the underwater communication interface 230 shown in FIG. 2F. In some embodiments, if different identities are set for the electronic device 100, information lists displayed by the electronic device 100 may be different, and the information lists may be used by the user to select to-be-sent information.

As shown in FIG. 2F, in the underwater communication interface 230, the identity prompt 232a displayed in the identity entry 232 may be text "Coach 1", and indicate to the user that a currently set identity is "Coach 1".

In this way, the electronic device 100 may enable the underwater communication function before entering water, and set the identity based on an operation of the user.

It may be understood that the embodiments shown in FIG. 2A to FIG. 2F are merely examples. In embodiments of this application, the electronic device 100 may also enable the underwater communication function in another manner. In some embodiments, a diving application may be installed on the electronic device 100. In this case, the electronic device 100 may enable the underwater communication function in the diving application. In some other embodiments, a function related to underwater communication may also be set in a sports application (or another application). In this case, the electronic device 100 may also enable the underwater communication function by using the sports application. This is not limited in this application.

The following describes diagrams of a group of interfaces for sending information to another electronic device underwater by the electronic device 100 provided in embodiments of this application.

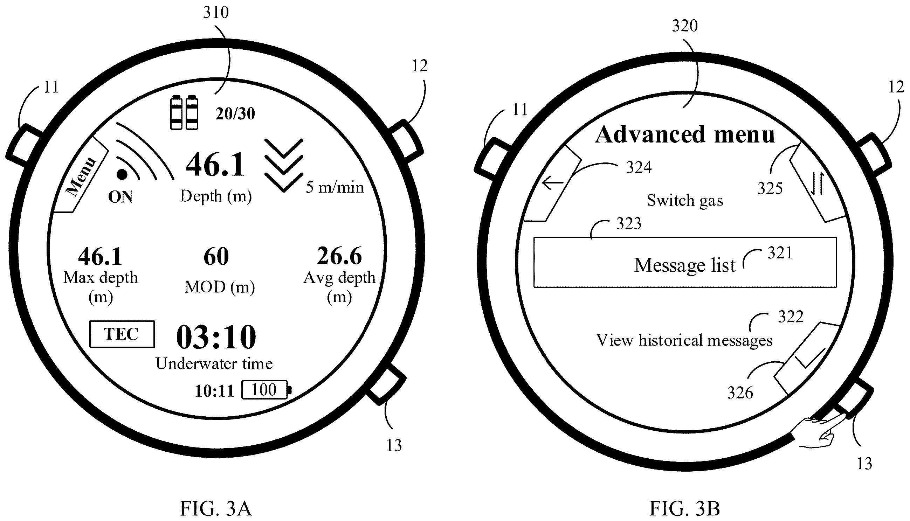

For example, when the electronic device 100 detects that the user dives, as shown in FIG. 3A, the electronic device 100 may display a diving status interface 310. The diving status interface 310 may include one or more diving indicators, for example, current remaining oxygen, descent depth, descent rate, maximum depth and average depth in this descent, and underwater time. A current time and a battery level of the electronic device 100 may be further display in the diving status interface 310.

The electronic device 100 may receive an operation performed by the user on the button 11, and in response to the operation, display an advanced menu interface 320 shown in FIG. 3B.

As shown in FIG. 3B, a menu list may be displayed in the advanced menu interface 320, and the menu list may include one or more options, for example, a gas switching option, a message list option 321, and a historical message viewing option 322. In FIG. 3B, a selection indicator 323 may be displayed on the message list option 321, and the selection indicator 323 indicates to the user that a currently selected option is the message list option 321. For other content of the selection indicator 323, refer to related descriptions in the embodiment shown in FIG. 2E. Optionally, one or more button operation prompts may be further display in the advanced menu interface 320, to prompt the user with corresponding button functions. For example, a button operation prompt 324 displayed near the button 11 may indicate to the user that an operation on the button 11 may trigger the electronic device 100 to return to a previous interface (namely, the diving status interface 310). A button operation prompt 325 displayed near the button 12 may indicate to the user that an operation on the button 12 may trigger the electronic device 100 to switch a currently selected option. A button operation prompt 326 displayed near the button 13 may indicate to the user that an operation on the button 13 may trigger the electronic device 100 to display an interface corresponding to the currently selected option.

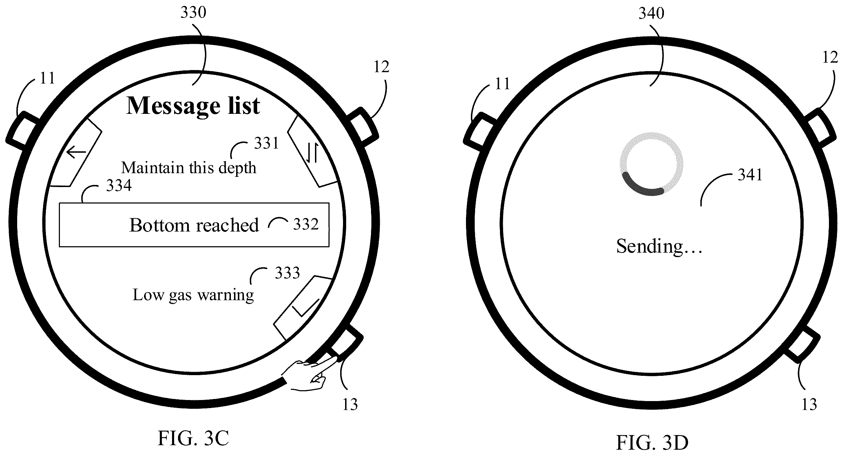

The electronic device 100 may receive an operation performed by the user on the button 13, and in response to the operation, display a message list 330 shown in FIG. 3C.

As shown in FIG. 3C, the message list 330 may include one or more pieces of preset information, for example, preset information 331, preset information 332, and preset information 333. The preset information 331 may be text "Maintain this depth", the preset information 332 may be text "Bottom reached", and the preset information 333 may be text "Low gas warning". In FIG. 3C, a selection indicator 334 may be further displayed on the preset information 332, to indicate to the user that the preset information 333 is selected preset information. Optionally, a plurality of button operation prompts may be further display in the message list 330. For specific content of the plurality of button operation prompts, refer to related descriptions in the embodiment shown in FIG. 3B.

The electronic device 100 may receive an operation performed by the user on the button 13, and in response to the operation, send an acoustic wave signal carrying the preset information 332, and display a sending interface 340 shown in FIG. 3D.

As shown in FIG. 3D, a sending status 341 may be displayed in the sending interface 340. The sending status may include sending, sent, sending failure, and the like. The sending status 341 may indicate to the user that a current sending status of information is sending.

In some embodiments, sent information may also be displayed in the sending interface 340, and the sent information may include preset information (for example, the preset information 332 shown in FIG. 3C) selected by the user and the identity (namely, coach 1) of the electronic device 100. Optionally, the sent information may further include a depth at which the electronic device 100 is currently located and/or a sending moment. For example, the sent information may be "coach 1 @ depth 46.1 m, 5-23 10:25:31 bottom reached".

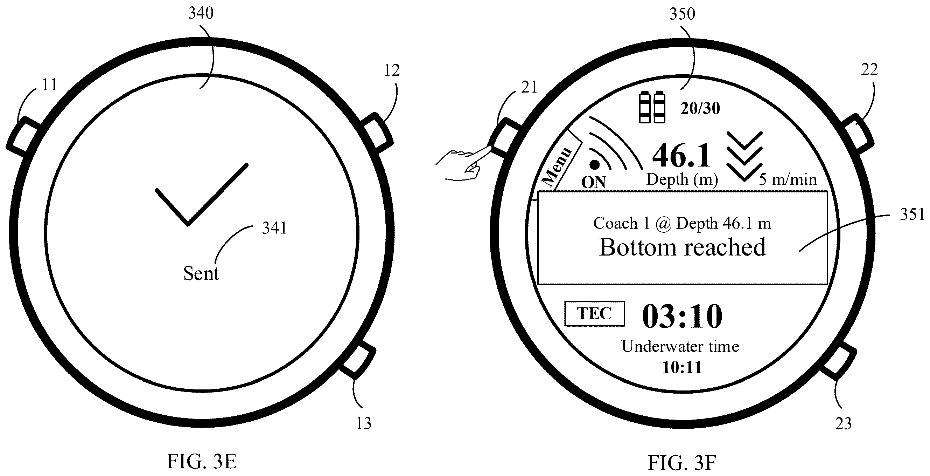

After the electronic device 100 completes sending, as shown in FIG. 3E, the electronic device 100 may update the sending status 341 in the sending interface 340, and change the sending status from "Sending" to "Sent".

After enabling the underwater communication function, the electronic device 200 may capture, by using the sound pickup sensor and/or the microphone, the acoustic wave signal sent by the electronic device 100, and obtain, through parsing from the acoustic wave signal, the information sent by the electronic device 100. As shown in FIG. 3F, when receiving the information sent by the electronic device 100, the electronic device 200 may display an information prompt window 351 in a diving status interface 350. The content of the information sent by the electronic device 100 may be displayed in the information prompt window 351, for example, "Coach 1 @ Depth 46.1 m, Bottom reached". It may be understood that, after the electronic device 200 receives the acoustic wave signal, the electronic device 200 may also output a receiving reminder in a manner of indicator blinking, vibration, sound, or the like, to indicate to the user that the information is received.

It may be understood that, after the electronic device 200 displays the information prompt window 351, the electronic device 200 may also send, to the electronic device 100 based on an operation of the user, an acoustic wave signal carrying acknowledgement information. For a specific interface diagram, refer to related descriptions in the embodiments shown in FIG. 3A to FIG. 3E. Details are not described herein again.

In some embodiments, after detecting that the electronic device 200 enters water, the electronic device 200 may also enable the underwater communication function, and capture, by using a component such as the sound pickup sensor and/or the microphone, the acoustic wave signal propagated in water.

In this way, the electronic device 100 may send a message to the electronic device 200 (or another electronic device) underwater by using the acoustic wave signal, or may receive a message sent by the electronic device 200, to implement long-distance underwater communication.

The following describes diagrams of a group of interfaces for joining a group by an electronic device 100 according to an embodiment of this application.

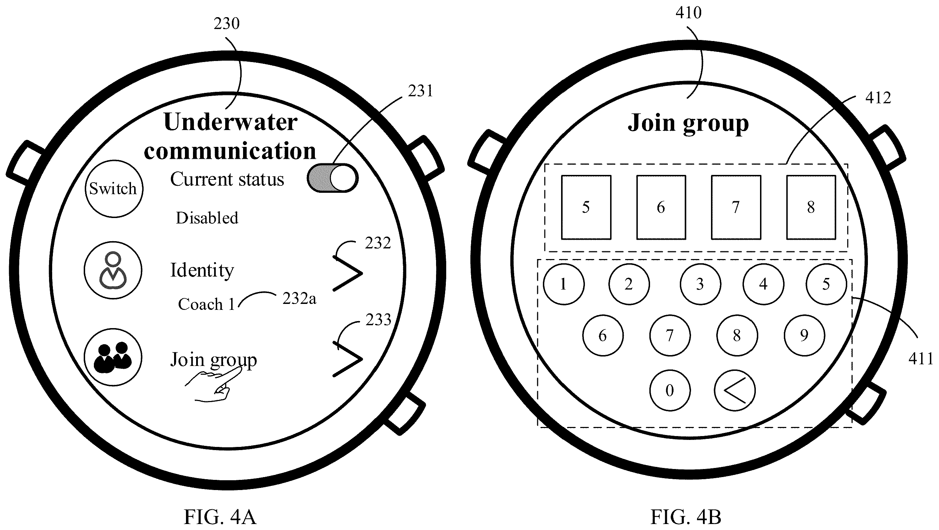

For example, as shown in FIG. 4A, the electronic device 100 displays an underwater communication interface 230, and the underwater communication interface 230 may be the same as the underwater communication interface 230 shown in FIG. 2F. The electronic device 100 may receive an operation performed by the user on a join group entry 233, and in response to the operation, display a join group interface 410 shown in FIG. 4B.

As shown in FIG. 4B, the join group interface 410 may include a numeric keypad 411 and an input area 412. The electronic device 100 may receive an input operation performed by the user on the numeric keypad 411, and in response to the input operation, display, in the input area 412, a numeric sequence like "5678" entered by the user.

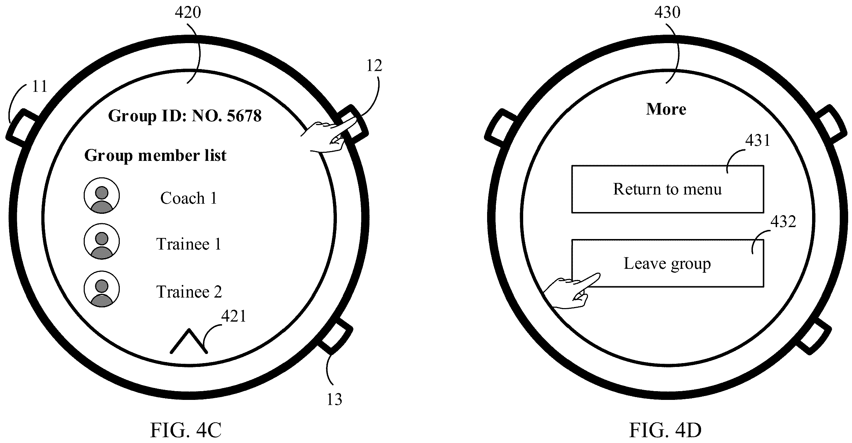

The electronic device 100 may add, based on the numeric sequence entered by the user, the electronic device 100 to a group corresponding to the numeric sequence, and display a member list interface 420 shown in FIG. 4C.

As shown in FIG. 4C, identities of one or more group members may be displayed in the member list interface 420, and the one or more group members all belong to a group whose group identifier (identifier, ID) is 5678. The identities of the one or more group members may include coach 1, trainee 1, trainee 2, and the like. The member list interface 420 may prompt the user with a quantity of group members in the group and an identity of each group member. A group ID, for example, "Group ID: NO. 5678" may be further displayed in the member list interface 420. Optionally, the member list interface 420 may further include a return control 421, used to trigger the electronic device 100 to return to the underwater communication interface 230.

The electronic device 100 may receive an operation performed by the user on the button 12, and in response to the operation, display a group operation interface 430 shown in FIG. 4D.

As shown in FIG. 4D, the group operation interface 430 may include a return to menu control 431 and a leave group control 432. The return to menu control 431 may be used to trigger the electronic device 100 to return to the underwater communication interface 230. The leave group control 432 is used to trigger the electronic device 100 to leave the current group.

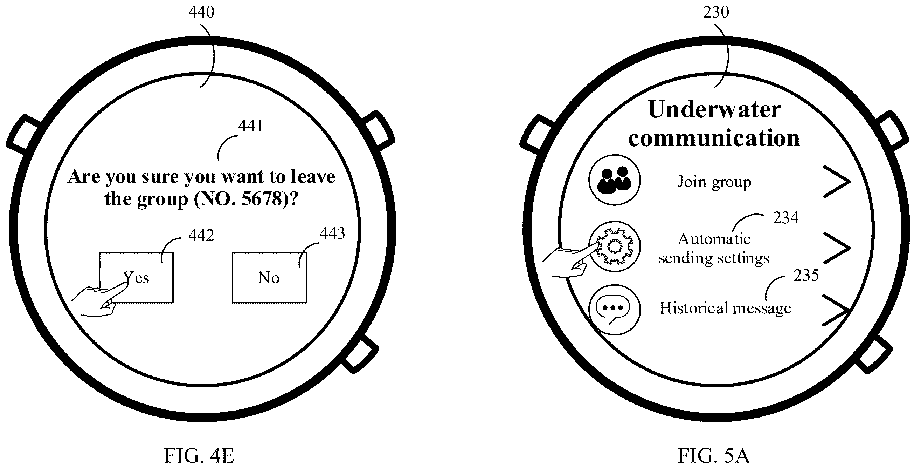

The electronic device 100 may receive an operation performed by the user on the leave group control 432, and in response to the operation, display a leave interface 440 shown in FIG. 4E.

As shown in FIG. 4E, a leave prompt 441, a yes control 442, and a no control 443 may be displayed in the leave interface 440. The leave prompt 441 is used to ask the user whether the user confirms leaving the current group. For example, the leave prompt 441 may be text "Are you sure you want to leave the group (NO. 5678)?". The yes control 442 is used to trigger the electronic device 100 to leave the current group, and the no control 443 is used to trigger the electronic device 100 to close the leave interface 440 and re-display the group operation interface 430 or the member list interface 420.

In this way, the electronic device 100 may join a group, or may leave a group that has been joined.

It may be understood that the embodiments shown in FIG. 4A to FIG. 4E are merely examples. In embodiments of this application, the electronic device 100 may alternatively create a group in another manner. This is not limited in this application.

In some embodiments, the electronic device 100 may alternatively create a group in the manner shown in FIG. 4A to FIG. 4E. This is not limited in this application.

The following describes diagrams of a group of interfaces for setting automatic sending conditions of the electronic device 100 according to an embodiment of this application.

For example, as shown in FIG. 5A, the electronic device 100 displays an underwater communication interface 230. For related descriptions of the underwater communication interface 230, refer to related descriptions in the embodiment shown in FIG. 2F. In addition, the underwater communication interface 230 may further include an automatic sending setting entry 234 and a historical message entry 235. The automatic sending setting entry 234 may be used to trigger the electronic device 100 to display an automatic sending setting interface. The historical message entry 235 may be used to trigger the electronic device 100 to display a received historical message.

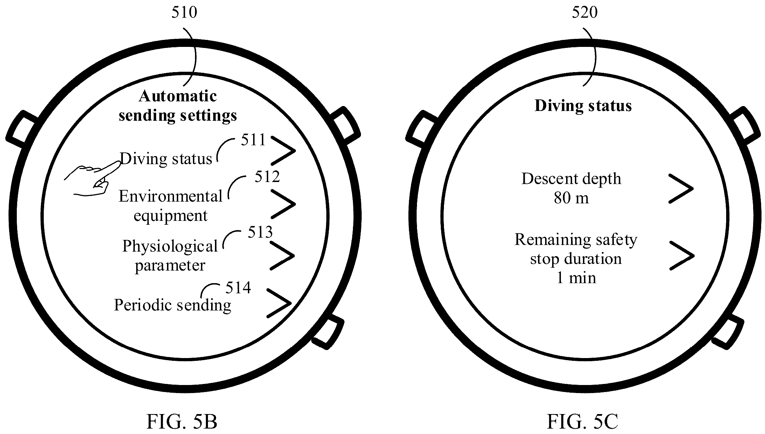

The electronic device 100 may receive an operation performed by the user on the automatic sending setting entry 234, and in response to the operation, display an automatic sending setting interface 510 shown in FIG. 5B.

As shown in FIG. 5B, the automatic sending setting interface 510 may include one or more setting entries, for example, a diving status entry 511, an environmental equipment entry 512, a physiological parameter entry 513, and a periodic sending entry 514. Each setting entry may be used to trigger the electronic device 100 to display a corresponding sending condition setting interface.

For example, the electronic device 100 may receive an operation performed by the user on the diving status entry 511, and in response to the operation, display a diving status setting interface 520 shown in FIG. 5C.

As shown in FIG. 5C, the diving status setting interface 520 may include one or more setting options, and each setting option may correspond to one diving status parameter, for example, descent depth, ascent depth, safety stop duration, and no-decompression limit. In addition, each setting option may be used to set an automatic sending condition corresponding to the diving status parameter, and in some embodiments, may be further used to set sent information. When detecting that the diving status parameter meets the corresponding automatic sending condition, the electronic device 100 may send an acoustic wave signal carrying information.

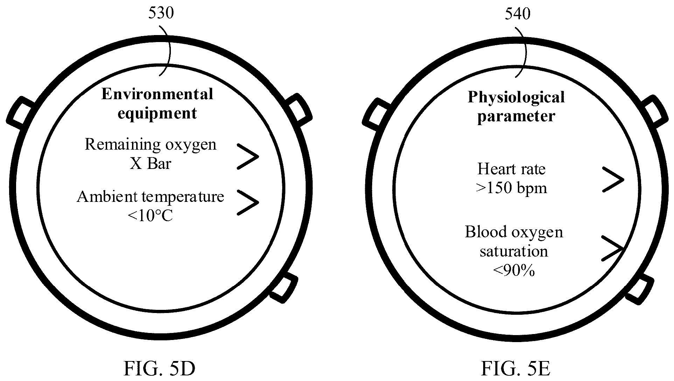

For another example, the electronic device 100 may receive an operation performed by the user on the environmental equipment entry 512, and in response to the operation, display an environmental equipment setting interface 530 shown in FIG. 5D.

As shown in FIG. 5D, the environmental equipment setting interface 530 may include one or more setting options, and each setting option may correspond to one diving status parameter, for example, remaining oxygen and ambient temperature. Each setting option may be used to set an automatic sending condition corresponding to the environmental equipment parameter, and in some embodiments, may be further used to set sent information. When detecting that the environmental equipment parameter meets the corresponding automatic sending condition, the electronic device 100 may send an acoustic wave signal carrying information.

For another example, the electronic device 100 may receive an operation performed by the user on the physiological parameter entry 513, and in response to the operation, display a physiological parameter setting interface 540 shown in FIG. 5E.

As shown in FIG. 5E, the physiological parameter setting interface 540 may include one or more setting options, and each setting option may correspond to one physiological parameter, for example, heart rate, blood oxygen saturation, body temperature, and blood pressure. In addition, each setting option may be used to set an automatic sending condition corresponding to the physiological parameter, and in some embodiments, may be further used to set sent information. When detecting that the physiological parameter meets the corresponding automatic sending condition, the electronic device 100 may send an acoustic wave signal carrying information.

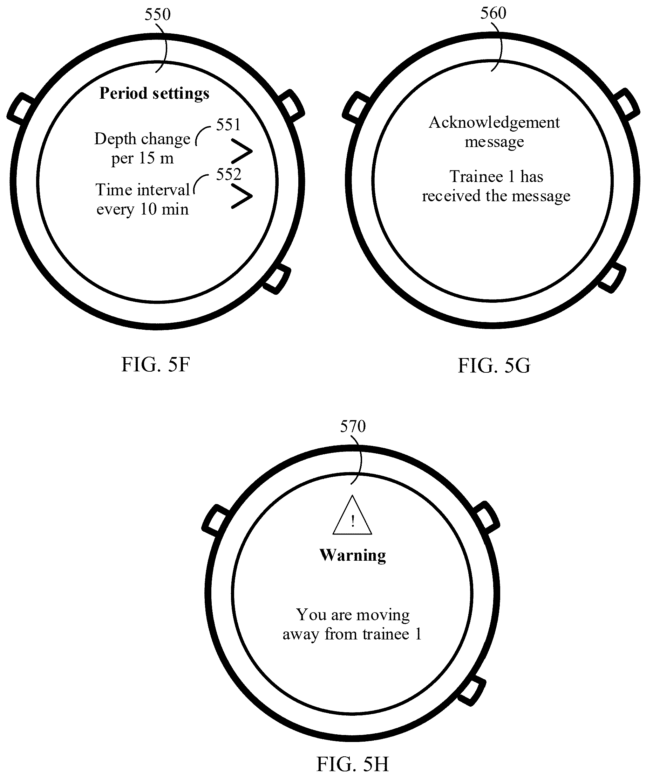

For another example, the electronic device 100 may receive an operation performed by the user on the periodic sending entry 514, and in response to the operation, display a period setting interface 550 shown in FIG. 5F.

As shown in FIG. 5F, the period setting interface 550 may include one or more setting options, for example, a depth setting option 551 and a time setting option 552. The depth setting option 551 may be used to set a correspondence between a depth change and information sending. For example, the electronic device 100 may set the depth change to 15 meters. In this case, the electronic device 100 may send information once each time the depth of the electronic device 100 underwater changes by 15 meters. The time setting option 552 may be used to set an information sending period. For example, the electronic device 100 may set a time interval to 10 minutes. In this case, the electronic device 100 may send information once every 10 minutes underwater. Optionally, the one or more setting options may be further used to set an electronic device (for example, the electronic device 200) that receives the information.

In this way, the information sending conditions of the electronic device 100 may be set.

It may be understood that the embodiments shown in FIG. 5A to FIG. 5F are merely examples. In embodiments of this application, the electronic device 100 may set more or fewer information sending conditions than those in the foregoing embodiments or different information sending conditions from those in the foregoing embodiments. This is not limited in this application.

In some embodiments, after sending the information to the electronic device 200, the electronic device 100 may receive an acknowledgement message sent by the electronic device 200, and display an acknowledgement interface 560 shown in FIG. 5G.

As shown in FIG. 5G, an acknowledgement message, for example, "Trainee 1 has received the message", may be displayed in the acknowledgement interface 560. The acknowledgement message may be used to notify the user that the peer end has received a previously sent message.

In this way, the user of the electronic device 100 may determine whether the electronic device 200 receives the information.

In some embodiments, the electronic device 100 may periodically communicate with the electronic device 200, and determine a change of a distance between the electronic device 100 and the electronic device 200 based on a time interval between sending a signal and receiving an acknowledgement message. The electronic device 100 may further output a distance change prompt when detecting that the distance between the electronic device 200 and the electronic device 100 increases, as shown in FIG. 5H, to indicate to the user that the user is moving away from the electronic device 200. The distance change prompt may be text, for example, "You are moving away from trainee 1". Trainee 1 is an identity of the electronic device 200.

It may be understood that the embodiment shown in FIG. 5H is merely an example. In embodiments of this application, the electronic device 100 may also output a distance change prompt when detecting that the distance between the electronic device 100 and the electronic device 200 (or another electronic device) decreases, to indicate to the user that the user is approaching the electronic device 200. This is not limited in this application.

In this way, the user can be reminded of a change of a distance between the user and a user of the another electronic device, to facilitate management and improve diving safety.

The following describes a procedure of the underwater communication method provided in embodiments of this application.

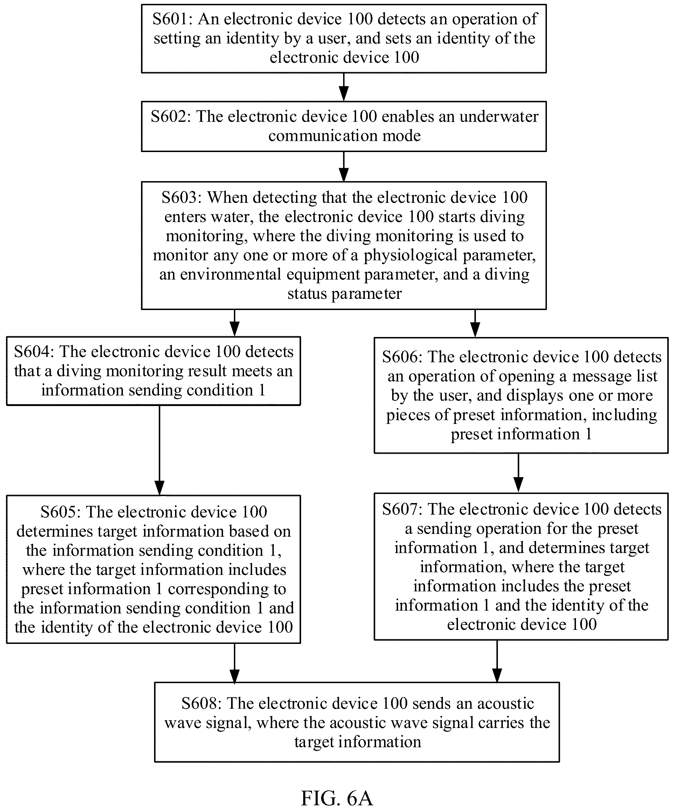

As shown in FIG. 6A, a specific procedure of the underwater communication method provided in embodiments of this application may include the following steps.

S601: An electronic device 100 detects an operation of setting an identity by a user, and sets an identity of the electronic device 100.

For the operation of setting the identity by the user, refer to related descriptions in the embodiments shown in FIG. 2D to FIG. 2F.

The identity of the electronic device 100 may be used to identify an identity of the user using the electronic device 100. In some embodiments, the identity may include an identifier and a sequence number, for example, coach 1, coach 2, trainee 1, trainee 2, trainee 3, safety officer 1, dive buddy 1, and dive guide 1. The identity may include any one or more of the following: coach, trainee, dive buddy, safety officer, dive guide, and the like.

It should be noted that the electronic device 100 may receive the operation of setting the identity by the user, and in response to the operation, determine the identity. In some other embodiments, the electronic device 100 may also receive the operation of setting the identity by the user, and in response to the operation, determine the identity; and determine a sequence number in the identity based on a device serial number (SerialNo, SN) code of the electronic device 100, to determine the identity of the electronic device 100. In this way, different electronic devices can be prevented from setting a same identity.

It may be understood that the foregoing embodiment is merely an example. In embodiments of this application, the identity may alternatively be another identifier that can be used to identify the identity of the user of the electronic device 100, and the identity may alternatively be determined in another manner. This is not limited in this application.

S602: The electronic device 100 enables an underwater communication mode.

In some embodiments, the electronic device 100 may receive an operation of enabling the underwater communication mode by the user, and in response to the operation, enable the underwater communication mode. For example, the operation of enabling the underwater communication mode by the user may be the operation on the enable switch 231 in the embodiment shown in FIG. 2C.

In some embodiments, the electronic device 100 may enable the underwater communication mode when detecting that the electronic device 100 enters water. After the electronic device 100 enters water, a detection result of a depth sensor of the electronic device 100 changes, and a capacitance of a display of the electronic device 100 also changes due to factors such as water pressure. Therefore, the electronic device 100 may determine, by using a capacitance value change of the display and/or a detection result change of the depth sensor, whether the electronic device 100 enters water. For example, when detecting that a depth of the electronic device 100 underwater reaches a depth threshold (for example, 0.5 meters or 2 meters), the electronic device 100 may determine that the electronic device 100 enters water.

It should be noted that the electronic device 100 may perform step S602 after performing step S601, or may perform step S601 after performing step S602.

In some embodiments, when the electronic device 100 enables the underwater communication mode, if the electronic device 100 detects that the identity of the electronic device 100 is not set, the electronic device 100 may prompt the user to set the identity of the electronic device 100.

S603: When detecting that the electronic device 100 enters water, the electronic device 100 starts diving monitoring, where the diving monitoring is used to monitor any one or more of a physiological parameter, an environmental equipment parameter, and a diving status parameter.

For a manner of determining whether the electronic device 100 enters water, refer to related descriptions of step S602.

The physiological parameter may include any one or more of the following: body temperature, heart rate, blood pressure, blood oxygen saturation, central nervous system (CNS) toxin concentration, or the like.

The environmental equipment parameter may include any one or more of the following: water temperature, water depth, water current speed, ambient light intensity, water pressure, remaining oxygen, remaining safe duration, no-decompression limit, diving duration, or the like.

The diving status parameter may include a diving status and a diving parameter. The diving status may include any one or more of the following: ascent, descent, stop, or the like. The diving parameter may include any one or more of the following: stop duration, ascent rate, descent rate, or the like.

The electronic device 100 may simultaneously enable detection of a plurality of parameters, or may separately enable monitoring of different parameters in the plurality of parameters. For example, if the parameters such as the water depth, the water temperature, the body temperature, the blood pressure, and the remaining oxygen need to be monitored during diving monitoring, the electronic device 100 may start to monitor all the foregoing parameters when detecting that the electronic device 100 enters water. Alternatively, the electronic device 100 may monitor the water depth, the body temperature, and the blood pressure before entering water, and start to monitor other parameters such as the water temperature and the remaining oxygen when underwater communication is enabled. It may be understood that, the embodiment herein merely illustrates that the electronic device 100 may simultaneously enable monitoring of all the parameters, or may separately enable monitoring of different parameters. In some other embodiments, the plurality of parameters may further include more or fewer parameters than those in the foregoing embodiment or different parameters from those in the foregoing embodiment. This is not limited in this application.

S604: The electronic device 100 detects that a diving monitoring result meets an information sending condition 1.

The diving monitoring result may include a monitoring result of the electronic device 100 for any one or more of the parameters described in step S603.

The electronic device 100 may store one or more information sending conditions, including the information sending condition 1.

The information sending condition 1 may be a limitation condition for one parameter in the diving monitoring result, for example, the water temperature is lower than 10°C, the remaining safe duration is less than 5 minutes, or the water depth reaches 20 meters.

The information sending condition 1 may alternatively be a limitation condition on a plurality of parameters in the diving monitoring result, for example, descent is performed and the water depth is 10 meters, ascent is performed and the water depth is 20 meters, or stop is performed and the stop duration is 5 minutes.

It should be noted that, in some embodiments, a preset range may be further preset for each parameter in the diving monitoring result, and the preset range may be a normal value range of the parameter. If the parameter does not fall within the interval, it indicates that the user may be in a dangerous situation currently. In this case, the limitation condition on the parameter in the diving monitoring result may be that a monitoring value of the parameter does not fall within the preset range. In some other embodiments, the preset range may also be an abnormal value range. In this case, the limitation condition on the parameter in the diving monitoring result may be that a monitoring value of the parameter falls within the preset abnormal value range. In some other embodiments, the limitation condition on the parameter in the diving monitoring result may alternatively be that it is detected that the parameter reaches a preset threshold, for example, the diving depth reaches 20 meters.

It may be understood that there are merely examples in the embodiment. In embodiments of this application, the information sending condition 1 may further include more or less content than that in the foregoing embodiment or different content from that in the foregoing embodiment. This is not limited in this application.

S605: The electronic device 100 determines target information based on the information sending condition 1, where the target information includes preset information 1 corresponding to the information sending condition 1 and the identity of the electronic device 100.

The electronic device 100 may store one or more pieces of preset information, and there may be correspondences between the one or more pieces of preset information and the one or more information sending conditions mentioned in step S604.

For example, Table 1 shows a correspondence between an information sending condition and preset information that are stored in the electronic device 100.

**Table 1**

| Information sending condition | | | Preset information |
|---|---|---|---|
| Diving status parameter | Environmental equipment parameter | Physiological parameter | |
| The stop duration reaches 3 minutes | / | / | I have stopped for 3 minutes |
| / | The remaining oxygen is 20 bars (bars) | / | I have 20 bars of oxygen left |
| / | The ambient temperature is 10°C | / | The ambient temperature is 10°C |
| / | / | The heart rate is lower than 50 bpm (bpm) | My heart rate is lower than 50 bpm |
| / | / | The blood oxygen saturation reaches 95% | The blood oxygen saturation is 95% |
| Ascent | The water depth is 5 meters | / | I have ascended to the water depth of 5 meters |
| Descent | The water depth is 15 meters | / | I have descended to the water depth of 15 meters |
| Stop at a same depth for 2 minutes | The water depth is 10 meters | / | I have safely stopped at 10 meters for 2 minutes |

It can be learned from Table 1 that the electronic device 100 may determine the corresponding preset information based on the information sending condition. For example, when the information sending condition is that the user stops at a same location for 3 minutes, the preset information is "I have stopped for 3 minutes". When the information sending condition is that the remaining oxygen is 20 bars (bars), the preset information is "I have 20 bars of oxygen left". When the information sending condition is that the ambient temperature (for example, the water temperature) is 10°C, the preset information is "The ambient temperature is 10°C". When the information sending condition is that the heart rate is lower than 50 bpm (bpm), the preset information is "My heart rate is lower than 50 bpm". When the information sending condition is that the blood oxygen saturation reaches 95%, the preset information is "The blood oxygen saturation is 95%". When the information sending condition is that the user is detected to ascend and the water depth is 5 meters currently, the preset information is "I have ascended to a water depth of 5 meters". When the information sending condition is that the user is detected to descend and the water depth is 15 meters currently, the preset information is "I have descended to a water depth of 15 meters". When the information sending condition is that the user is detected to stop at a same depth for 2 minutes and the water depth is 10 meters, the preset information is "I have safely stopped at 10 meters for 2 minutes".

It may be understood that the embodiment shown in Table 1 is merely an example. In embodiments of this application, the electronic device 100 may store more or fewer information sending conditions and pieces of preset information than those in the embodiment shown in Table 1, or different information sending conditions and pieces of preset information from those in the embodiment shown in Table 1. This is not limited in this application.

After detecting that the diving monitoring result meets the information sending condition 1, the electronic device 100 may determine, based on stored correspondences between a plurality of information sending conditions and a plurality of pieces of preset information, the preset information 1 corresponding to the information sending condition 1.

In some other embodiments, the electronic device 100 may store a correspondence among an information sending condition, an identity, and preset information.

For example, Table 2 shows the correspondence among the information sending condition, the identity, and the preset information that are stored in the electronic device 100 according to embodiments of this application.

**Table 2**

| Information sending condition | | | Identity | Preset information |
|---|---|---|---|---|
| Diving status parameter | Environmental equipment parameter | Physiological parameter | | |
| The stop duration reaches 1 minute | / | / | Coach 1 | Stop |
| | | | Trainee 1 | I have stopped for 1 minute |
| / | The ambient temperature is 5°C | / | Coach 1 | The ambient temperature is low. Be careful |
| | | | Trainee 1 | The ambient temperature is 5°C |
| Ascent | The water depth is 25 meters | / | Coach 1 | Ascend to the water depth of 25 meters and follow me closely |
| | | | Trainee 1 | I have ascended to the water depth of 25 meters |
| Descent, and a descent rate is 5 meters per minute | / | / | Coach 1 | Keep descending at the rate of 5 meters per minute |
| | | | Trainee 1 | The descent rate is 5 meters per minute currently |

It can be learned from Table 2 that the electronic device 100 may also determine the preset information based on the information sending condition and the identity. For example, when the information sending condition is that the user stops at a same location for 1 minute, and if the identity is coach 1, the preset information is "Stop", or if the identity is trainee 1, the preset information is "I have stopped for 1 minute". When the information sending condition is that the ambient temperature is 5°C, and if the identity is coach 1, the preset information is "The ambient temperature is low. Be careful", or if the identity is trainee 1, the preset information is "The ambient temperature is 5°C". When the information sending condition is that the user is detected to ascend and the water depth at the current location is 25 meters, and if the identity is coach 1, the preset information is "Ascend to the water depth of 25 meters and follow me closely", or if the identity is trainee 1, the preset information is "I have ascended to the water depth of 25 meters". When the information sending condition is that the user is detected to descend and the descent rate is 5 meters per minute, and if the identity is coach 1, the preset information is "Keep descending at the rate of 5 meters per minute", or if the identity is trainee 1, the preset information is "The descent rate is 5 meters per minute currently".

It may be understood that the embodiment shown in Table 2 is merely an example. In embodiments of this application, the electronic device 100 may store more or fewer information sending conditions, identities, and pieces of preset information than those in the embodiment shown in Table 2, or different information sending conditions, identities, and pieces of preset information from those in the embodiment shown in Table 2. This is not limited in this application.

After detecting that the diving monitoring result meets the information sending condition 1, the electronic device 100 may determine, based on the identity of the electronic device 100 and the correspondence that is among the information sending condition, the identity, and the preset information and that is stored in the electronic device 100, the preset information 1 corresponding to the electronic device 100 when the information sending condition 1 is met.

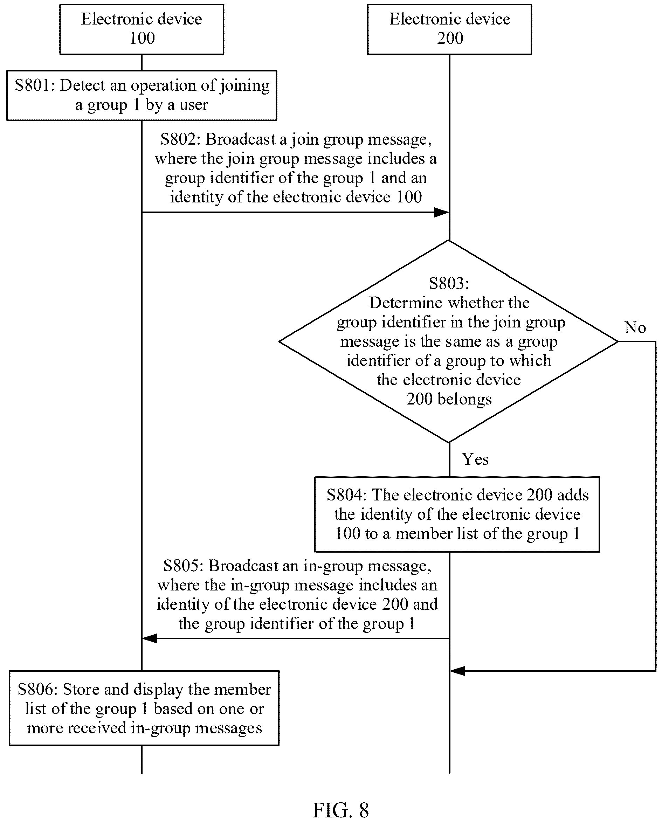

After determining the preset information 1, the electronic device 100 may obtain the target information, where the target information may include the preset information 1 and the identity of the electronic device 100. Optionally, if the electronic device 100 belongs to a group, the target information may further include a group identifier of the group. For related content of the group identifier, refer to related content in the following embodiment shown in FIG. 8. Details are not described herein.

After determining the target information, the electronic device 100 may perform step S608.

S606: The electronic device 100 detects an operation of opening a message list by the user, and displays one or more pieces of preset information, including preset information 1.

For example, the operation of opening the message list by the user may be the operation performed by the user on the button 13 in the embodiment shown in FIG. 3B, and the message list may be the message list 330 shown in FIG. 3C.

In some embodiments, the one or more pieces of preset information displayed in the message list may be all preset information stored in the electronic device 100. In some other embodiments, the one or more pieces of preset information displayed in the message list may also be the one or more pieces of preset information determined by the electronic device 100 based on the identity of the electronic device 100 and/or the diving monitoring result. It should be noted that, in this case, the diving monitoring result does not meet the information sending condition in step S604 and step S605.

For example, Table 3 shows a correspondence among a diving monitoring result, an identity, and preset information that are stored in the electronic device 100 according to an embodiment of this application.

**Table 3**

| Diving monitoring result | | | Identity | Preset information |
|---|---|---|---|---|
| Diving status parameter | Environmental equipment parameter | Physiological parameter | | |
| / | / | / | Coach 1 | Stop |
| | | | | Ascend |
| | | | | Descend |
| | | | | Follow me closely |
| | | | | Check in, everyone |
| | | | | Check pressure gauge readings |
| | | | | Preparation completed |
| | | | Trainee 1 | Understood |
| | | | | I need assistance |
| | | | | Everything is OK |
| | | | | Emergency! Help |
| Ascent | / | / | Coach 1 | Ascend. Follow me closely |
| | | | | Look at my side. There is something |
| | | | | Keep the speed |
| | | | | Speed up |
| | | | | Slow down |
| | | | Trainee 1 | Understood |
| | | | | I have started ascending |

It can be learned from Table 3 that the electronic device 100 may determine, based on the diving monitoring result and the identity, one or more pieces of preset information to be displayed. For example, if the identity is coach 1, the plurality of pieces of corresponding preset information may include: "Stop", "Ascend", "Descend", "Follow me closely", "Check in, everyone", "Check pressure gauge readings", "Preparation completed", and the like. If the identity is trainee 1, the plurality of pieces of corresponding preset information may include: "Understood", "I need assistance", "Everything is OK", "Emergency! Help", and the like. When the diving monitoring result indicates that the user is ascending, and if the identity is coach 1, the plurality of pieces of corresponding preset information may include: "Ascend. Follow me closely", "Look at my side. There is something", "Keep the speed", "Speed up", "Slow down", and the like. When the diving monitoring result indicates that the user is ascending, and if the identity is trainee 1, the plurality of pieces of corresponding preset information may include: "Understood" and "I have started ascending".

It may be understood that the embodiment shown in Table 3 is merely an example. In embodiments of this application, the electronic device 100 may store more or fewer diving monitoring results, identities, and pieces of preset information than those in the embodiment shown in Table 3, or different diving monitoring results, identities, and pieces of preset information from those in the embodiment shown in Table 3. This is not limited in this application.

S607: The electronic device 100 detects a sending operation for the preset information 1, and determines target information, where the target information includes the preset information 1 and the identity of the electronic device 100.

The sending operation for the preset information 1 may be the operation performed by the user on the button 13 in the embodiment shown in FIG. 3C.

The target information may include the preset information 1 and the identity of the electronic device 100. Optionally, if the electronic device 100 belongs to a group, the target information may further include a group identifier of the group.

After determining the target information, the electronic device 100 may perform step S608.

S608: The electronic device 100 sends an acoustic wave signal, where the acoustic wave signal carries the target information.

After determining the target information, the electronic device 100 may encode the target information to obtain an encoded sequence of the acoustic wave signal, and then control, based on the encoded sequence, the sound-making module 170D to generate the acoustic wave signal corresponding to the encoded sequence. In this way, the generated acoustic wave signal carries the target information.

The following describes a structure of an acoustic wave signal.

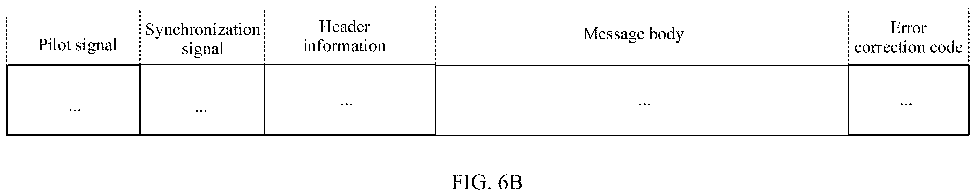

For example, FIG. 6B is a diagram of a structure of an acoustic wave signal according to an embodiment of this application.

As shown in FIG. 6B, the acoustic wave signal may include a pilot signal, a synchronization signal, a message body, and an error correction code. Optionally, the acoustic wave signal may further include header information. The pilot signal may be a preset signal. An electronic device (for example, an electronic device 200) at a receive end may determine, based on whether a received acoustic wave signal carries the pilot signal, whether the acoustic wave signal carries target information. The synchronization signal may be used for synchronization. After the electronic device 200 decodes the received acoustic wave signal, the electronic device 200 may determine a first digit of the message body from a decoded sequence based on the synchronization signal. The header information may indicate a length of an encoded sequence, and the header information may further indicate a sequence corresponding to each part of information. The message body may include the target information. The error correction code may be used to check the decoded sequence.

It may be understood that the embodiment shown in FIG. 6B is merely an example. In embodiments of this application, the acoustic wave signal may further include less or more content than that in the foregoing embodiment or different content from that in the foregoing embodiment. This is not limited in this application.

It can be learned from FIG. 6B that an encoded sequence of the acoustic wave signal may include not only an encoded sequence corresponding to the target information, but also a pilot sequence, a synchronization sequence, an error correction code, and the like. The pilot sequence, the synchronization sequence, and the error correction code may respectively correspond to the pilot signal, the synchronization signal, the error correction code, and the like in the acoustic wave signal. The pilot sequence may be a preset sequence. The synchronization sequence, the error correction code, a header information sequence, and the like may be determined after the encoded sequence of the target information is obtained.

In a process of encoding the target information, an electronic device 100 may encode the target information by using any one of encoding algorithms such as Morse code, orthogonal frequency division multiplexing (OFDM), and code division multiple access (CDMA), or encode the target information in time domain and/or frequency domain by using a user-defined encoding algorithm. A manner of encoding the target information is not limited in embodiments of this application.

For example, Table 4 shows encoded sequences corresponding to different preset information.

**Table 4**

| Preset information | Encoded sequence |
|---|---|
| The remaining oxygen is insufficient | Long Long Long Long Long |
| The ambient temperature is excessively low | Short Long Short Short Short |
| SOS | Short Long Short Short Long Long |

As shown in Table 4, the electronic device 100 may determine a corresponding encoded sequence based on the preset information. For example, when the preset information is "The remaining oxygen is insufficient", an encoded sequence corresponding to the preset information may be "Long Long Long Long Long"; when the preset information is "The ambient temperature is excessively low", a corresponding encoded sequence may be "Short Long Short Short Short"; and when the preset information is "SOS", a corresponding encoded sequence may be "Short Long Short Short Long Long". "Long" and "Short" may alternatively be respectively replaced with "1" and "0".

It may be understood that the embodiment shown in Table 4 is merely an example. In embodiments of this application, more or fewer pieces of preset information and encoded sequences than those in the embodiment shown in Table 4, or different pieces of preset information and encoded sequences from those in the embodiment shown in Table 4 may be included, and a correspondence between preset information and an encoded sequence may alternatively be different from that in the foregoing embodiment. This is not limited in this application.

For example, Table 5 shows encoded sequences corresponding to different identities.

**Table 5**

| Identity | Encoded sequence |
|---|---|
| Coach 1 | Long Long Short |
| Trainee 1 | Short Short Short |
| Dive buddy 2 | Long Short Long |

As shown in Table 5, the electronic device 100 may alternatively determine, based on the identity, an encoded sequence corresponding to the identity. For example, when the identity is "Coach 1", a corresponding encoded sequence may be "Long Long Short"; when the identity is "Trainee 1", a corresponding encoded sequence may be "Short Short Short"; and when the identity is "Dive buddy 2", a corresponding encoded sequence may be "Long Short Long". "Long" and "Short" may alternatively be respectively replaced with "1" and "0".

It may be understood that the embodiment shown in Table 5 is merely an example. In embodiments of this application, more or fewer identities and encoded sequences than those in the embodiment shown in Table 5, or different identities and encoded sequences from those in the embodiment shown in Table 5 may be included, and a correspondence between an identity and an encoded sequence may alternatively be different from that in the foregoing embodiment. This is not limited in this application.

After determining the target information, the electronic device 100 may determine, based on the relationship between the preset information and the encoded sequence, the encoded sequence corresponding to the preset information 1, and determine, based on the relationship between the identity and the encoded sequence, the encoded sequence corresponding to the identity of the electronic device 100, to obtain the encoded sequence corresponding to the target information, and further obtain the encoded sequence of the acoustic wave signal.

After obtaining the encoded sequence of the acoustic wave signal, the electronic device 100 may drive, based on the encoded sequence, the sound-making module to make a sound, to generate the acoustic wave signal carrying the target information.

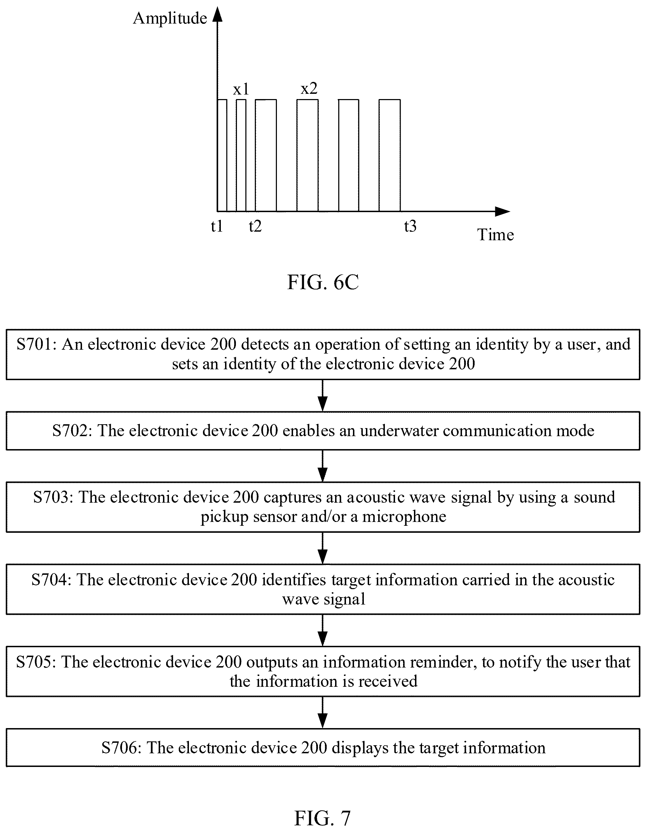

For example, if an encoded sequence of an acoustic wave signal X(t) is "Short Short Long Long Long Long", a diagram of a waveform of the acoustic wave signal X(t) is shown in FIG. 6C.

As shown in FIG. 6C, a horizontal axis represents time, and a vertical axis represents an amplitude of an acoustic wave signal. Duration of the acoustic wave signal X(t) is T. In a time period from t1 to t2, the acoustic wave signal includes two rectangular pulse waves, and a width of each rectangular pulse wave in time domain is x1. In a time period from t2 to t3, the acoustic wave signal includes four rectangular pulse waves, and a width of each rectangular pulse wave in time domain is x2, where x2>x1, and t1<t2<t3.

It may be understood that the embodiment shown in FIG. 6C is merely an example. In embodiments of this application, the waveform of the acoustic wave signal may alternatively be a waveform different from that in the foregoing embodiment. This is not limited in this application. It should be noted that "Long" and "Short" in the encoding sequence may refer to long duration and short duration of a single rectangular pulse wave in the acoustic wave signal, or may refer to a long wavelength and a short wavelength of the acoustic wave signal. This is not limited in this application.

According to the underwater communication method provided in embodiments of this application, the electronic device 100 may send information by using an acoustic wave signal, to implement underwater long-distance communication. In addition, the electronic device 100 may not only send information selected by a user, but also remind, in a timely manner, the user to be careful when detecting that the user may be in danger, and may also send an SOS message to a companion in a timely manner when the user is in danger. This can improve diving safety.

In some embodiments, when detecting that a value of any one of parameters such as the physiological parameter, the environmental equipment parameter, and the diving status parameter is outside a preset range, for example, when detecting that the remaining oxygen for the user is insufficient, or when detecting that a heart rate of the user is excessively fast, the electronic device 100 may output a danger prompt when sending specified information, to prompt the user with a current situation. Optionally, a self-rescue measure corresponding to a current scenario may be further output. In this way, the user may take some self-rescue measures and wait for assistance from the companion.

In some other embodiments, the electronic device 100 may receive an operation of setting a diving type by the user, and in response to the operation, and set a current diving type. The diving type may include recreational scuba, technical diving, free diving, snorkeling, and the like. The electronic device 100 may store one or more pieces of preset information corresponding to different diving types. When the user manually sends information, the electronic device 100 may display, based on a current diving type, one or more pieces of preset information corresponding to the diving type for the user to select, and determine preset information based on an operation of the user. The electronic device 100 may further store a correspondence among a diving type, an information sending condition, and preset information. When detecting that a diving monitoring result meets an information sending condition, the electronic device 100 may determine corresponding preset information based on a current diving type and the information sending condition met by the diving monitoring result. For steps performed by the electronic device 100 after the preset information is determined, refer to related descriptions of step S605 and step S608 in the embodiment shown in FIG. 6A. Details are not described herein again.

In this way, the electronic device 100 may display preset information that better matches the current diving type, to help the user select more appropriate preset information.

In some embodiments, after entering water, the electronic device 100 may obtain and output location information of the electronic device 100 in real time. In some embodiments, the location information of the electronic device 100 may include a depth of the electronic device 100 underwater and a longitude and a latitude of the electronic device 100. In some other embodiments, the electronic device 100 may construct a three-dimensional spatial coordinate system. An origin of the three-dimensional spatial coordinate system may be a water entry location of the electronic device 100, or may be another preset location. In this case, the location information of the electronic device 100 may also be coordinates of the electronic device 100 in the three-dimensional spatial coordinate system. The electronic device 100 may determine the location information of the electronic device 100 by using a sensor like a gyroscope sensor, an acceleration sensor, or a depth sensor. For example, the electronic device 100 may determine the depth of the electronic device 100 underwater based on a value measured by the depth sensor. For another example, after entering water, the electronic device 100 may obtain a movement trajectory of the electronic device 100 in the water based on a sensor like a gyroscope sensor or an acceleration sensor, determine a relative location relationship between the electronic device 100 and a water entry location, and the like.

In this way, the user can obtain the current location in real time.

It may be understood that, when the electronic device 100 obtains the location information of the electronic device 100, optionally, the target information in the embodiment shown in FIG. 6A may also include the location information of the electronic device 100. In this way, an electronic device of a receiver can obtain the location of the electronic device 100 in real time, facilitating group contact and collaboration and reducing diving risks.

In some embodiments, the receiving module 101 for an acoustic wave signal shown in FIG. 1C may be replaced with a micro sonar module (or a piezoelectric ceramic sensor). The micro sonar module may be an integrated micro sonar sensor, and may be configured to receive and send an acoustic wave signal. The electronic device 100 may increase a voltage of a transmitted signal to increase transmit power of the acoustic wave signal, to increase an underwater communication distance. The electronic device 100 may also implement underwater communication at a longer distance by configuring a micro sonar module with better performance.

In some embodiments, the electronic device 100 may also increase the underwater communication distance by defining private low-frequency wireless communication, reducing a propagation path loss, defining a redundant check field, and increasing the transmit power.

In some other embodiments, the electronic device 100 may further reduce noise interference in water by using an anti-interference algorithm like a noise reduction algorithm or a Doppler frequency shift, to reduce interference to the acoustic wave signal.

The following describes a procedure in which an electronic device 200 receives, underwater, target information sent by an electronic device 100 according to an embodiment of this application.

As shown in FIG. 7, a specific procedure in which the electronic device 200 receives, underwater, the target information sent by the electronic device 100 may include the following steps.

S701: The electronic device 200 detects an operation of setting an identity by a user, and sets an identity of the electronic device 200.

S702: The electronic device 200 enables an underwater communication mode.

For related content of step S701 and step S702, refer to related descriptions of step S601 and step S602 shown in FIG. 6A. Details are not described herein again.

S703: The electronic device 200 captures an acoustic wave signal by using a sound pickup sensor and/or a microphone.

After enabling the underwater communication mode, the electronic device 200 may start to capture the acoustic wave signal by using the sound pickup sensor and/or the microphone.

In some embodiments, the electronic device 200 may also start to capture the acoustic wave signal after detecting that the electronic device 200 enters water. For a manner of detecting that the electronic device 200 enters water, refer to related descriptions of step S602 shown in FIG. 6A.

S704: The electronic device 200 identifies target information carried in the acoustic wave signal.

After the acoustic wave signal transmitted by the electronic device 100 is propagated to the electronic device 200, the electronic device 200 may decode the captured acoustic wave signal, and identify the target information carried in the acoustic wave signal.

In some embodiments, if the electronic device 100 joins a group (for example, a group 1), the acoustic wave signal sent by the electronic device 100 may further carry a group identifier, and the group identifier may be located in the header information or the message body in the message structure shown in FIG. 6B. After receiving the acoustic wave signal, the electronic device 200 may check the group identifier. When determining that the group identifier carried in the acoustic wave signal is the same as a group identifier of the group to which the electronic device 200 belongs, the electronic device 200 further identifies other information (for example, an identity and information content) carried in the acoustic wave signal. If the group identifier carried in the acoustic wave signal is different from the group identifier of the group to which the electronic device 200 belongs, the electronic device 200 may stop processing the acoustic wave signal, and does not need to notify the user that the information is received.

S705: The electronic device 200 outputs an information reminder, to notify the user that the information is received.

After identifying the target information, the electronic device 200 may output the information reminder. The information reminder notifies the user that the electronic device 200 receives the information.

A manner of the information reminder may include any one or more of the following: vibration, indicator blinking, voice prompt, information notification display, or the like.

S706: The electronic device 200 displays the target information.

The electronic device 200 may receive an operation of viewing the target information by the user, and in response to the operation, display the target information. The operation of viewing the target information by the user may be an operation on a button.

In some other embodiments, the electronic device 200 may alternatively display the target information after outputting the information reminder.

According to the underwater communication method provided in embodiments of this application, the electronic device 100 and the electronic device 200 may implement underwater communication by using the acoustic wave signal, and a communication distance is greater than that in a wireless communication manner such as Bluetooth.

In some embodiments, the electronic device 100 may store a historical message, and the historical message includes information that has been received and/or information that has been sent. The electronic device 100 may receive an operation of viewing the historical message (for example, an operation on the historical message entry 235 shown in FIG. 5A) by the user, and in response to the operation, display the historical message. The electronic device 100 may further receive an operation of deleting the historical message by the user, and in response to the operation, delete one or more historical messages.

This can delete unnecessary information in a timely manner, and reduce storage pressure of the electronic device 100.

In some embodiments, the electronic device 100 may join a group. In this case, the electronic device 100 may perform underwater communication with another electronic device in the same group.

The following describes a procedure in which an electronic device 100 joins a group according to an embodiment of this application.

As shown in FIG. 8, a specific procedure in which the electronic device 100 joins the group may include the following steps.

S801: The electronic device 100 detects an operation of joining a group 1 by a user.

The operation of joining the group 1 by the user may be an operation of entering a group identifier (identifier, ID) of the group 1, for example, the operation of entering the group ID of the group 1 by the user in the embodiment shown in FIG. 4B. The group ID may be the numeric sequence like "5678".

S802: The electronic device 100 broadcasts a join group message, where the join group message includes the group identifier of the group 1 and an identity of the electronic device 100.

In some embodiments, the electronic device 100 may broadcast the join group message to the surroundings in response to the operation of joining the group 1 by the user. The join group message may include the group identifier of the group 1 and the identity of the electronic device 100.

The group identifier may be used to identify a group, and the group identifier may include any one or more of the following: the group ID, a group name, and the like.

For related content of the identity of the electronic device 100, refer to related descriptions in the embodiment shown in FIG. 6A. Details are not described herein again.

In some embodiments, before joining the group 1, the electronic device 100 may receive an operation of setting an identity by the user, and in response to the operation, set the identity of the electronic device 100. In some other embodiments, when the electronic device 100 joins the group 1, if the identity is not set, the electronic device 100 may prompt the user to perform the operation of setting the identity.

S803: Determine whether the group identifier in the join group message is the same as a group identifier of a group to which an electronic device 200 belongs.

In some embodiments, when the join group message is received, the electronic device 200 has joined the group, and in this case, the electronic device 200 stores the group identifier of the group. The electronic device 200 may compare the group identifier of the group 1 in the join group message with the group identifier stored in the electronic device 200.

When the group identifier of the group 1 is the same as the group identifier of the group to which the electronic device 200 belongs, the electronic device 100 may perform step S804.

When the group identifier of the group 1 is different from the group identifier of the group to which the electronic device 200 belongs, the electronic device 200 may not process the received message.

In some other embodiments, when the join group message is received, the electronic device 200 does not join a group, and the electronic device 200 has received the operation of joining the group by the user. In this case, the electronic device 200 may determine, based on the operation of joining the group by the user, a group identifier of the to-be-joined group. The electronic device 200 may compare the group identifier of the group 1 in the join group message with the group identifier of the to-be-joined group.

When the group identifier of the group 1 is the same as the group identifier of the to-be-joined group, the electronic device 100 may perform step S804.

When the group identifier of the group 1 is different from the group identifier of the to-be-joined group, the electronic device 200 may not process the received message.

S804: The electronic device 200 adds the identity of the electronic device 100 to a member list of the group 1.

In some embodiments, when receiving the join group message, the electronic device 200 has joined the group 1. In this case, the electronic device 200 stores the group identifier of the group 1 and the member list of the group 1. The member list of the group 1 stored in the electronic device 200 may include identities of one or more electronic devices, the one or more electronic devices include the electronic device 200, and the one or more electronic devices all belong to the group 1.

For example, Table 6 shows the member list of the group 1 stored in the electronic device 200 before the electronic device 200 receives the join group message according to an embodiment of this application.

**Table 6**

| Group identifier | Identity |
|---|---|
| 5678 | Trainee 1 |
| 5678 | Coach 2 |
| 5678 | Dive guide 1 |

As shown in Table 6, before the join group message is received, the member list of the group 1 stored in the electronic device 200 may include identities of one or more electronic devices: trainee 1, coach 2, and dive guide 1. Optionally, the member list may further include the group identifier of the group 1, for example, ID 5678, and the group identifier is used for the group corresponding to the identity.

After receiving the join group message, the electronic device 200 may add the identity of the electronic device 100 to the member list of the group 1.

For example, Table 7 shows a member list of the group 1 stored in the electronic device 200 after the join group message is received according to an embodiment of this application.

**Table 7**

| Group identifier | Identity |
|---|---|
| 5678 | Trainee 1 |
| 5678 | Coach 2 |
| 5678 | Dive guide 1 |
| 5678 | Coach 1 |

As shown in Table 7, after the join group message is received, the member list of the group 1 stored in the electronic device 200 may include identities of one or more electronic devices: trainee 1, coach 2, dive guide 1, and coach 1. Coach 1 is the identity of the electronic device 100. Optionally, the member list may further include the group identifier of the group 1, for example, ID 5678, and the group identifier is used for the group corresponding to the identity. Compared with Table 6, Table 7 adds the identity of the electronic device 100.

It may be understood that the embodiments shown in Table 6 and Table 7 are merely examples. In embodiments of this application, the member list of the group 1 may further include more or less content. This is not limited in this application.

S805: The electronic device 200 broadcasts an in-group message, where the in-group message includes an identity of the electronic device 200 and the group identifier of the group 1.

When determining that the electronic device 200 also belongs to the group 1, the electronic device 200 may broadcast the in-group message to the surroundings. The in-group message includes the identity of the electronic device 200 and the group identifier of the group 1. For the identity of the electronic device 200, refer to related descriptions of the identity of the electronic device 100. In addition, the identity of the electronic device 200 is different from the identity of the electronic device 100.

It should be noted that, if the group 1 further includes another electronic device in addition to the electronic device 200, the electronic device may also broadcast an in-group message after receiving the join group message broadcast by the electronic device 100 and determining that the electronic device belongs to the group 1, where the in-group message includes an identity of the electronic device and the group identifier of the group 1.

S806: The electronic device 100 stores and displays the member list of the group 1 based on one or more received in-group messages.

The electronic device 100 may receive an in-group message broadcast by each electronic device in the group 1, and each in-group message may include the group identifier of the group 1 and an identity of the electronic device.

The electronic device 100 may obtain identities of all electronic devices in the group 1 based on the one or more received in-group messages, and obtain the member list of the group 1. The member list of the group 1 may include the identities of all the electronic devices in the group 1. For specific content of the member list, refer to related descriptions of step S803.

After determining the member list of the group 1, the electronic device 100 may store and display the member list of the group 1. Optionally, when displaying the member list of the group 1, the electronic device 100 may further display the group identifier of the group 1, to indicate to the user that the currently displayed member list is the member list of the group 1.

In this way, electronic devices such as the electronic device 100 and the electronic device 200 may form a group, to perform underwater communication with one or more electronic devices in the same group after the user wears the electronic device 100 and enters water.

It may be understood that, for a specific procedure in which the electronic device 100 sends information underwater by using an acoustic wave signal, refer to the embodiment shown in FIG. 6A. For a specific procedure in which the electronic device 100 receives the information, refer to the embodiment shown in FIG. 7. In some embodiments, if the electronic device 100 joins a group, the target information sent by the electronic device 100 may include a group identifier. In some other embodiments, a plurality of electronic devices belonging to a same group may be provided with a same pilot signal. This helps the plurality of electronic devices belonging to the same group communicate with each other. In some application scenarios, a diving coach may also use an electronic device to send a group message to all trainees in a group, to implement instruction exchange between the coach and the trainees, thereby facilitating diving teaching and management.

In some embodiments, in a group establishment phase shown in FIG. 8, the electronic device 100 may also separately send a join group message to another electronic device in a wireless communication manner like Bluetooth or a wireless local area network, and the electronic device 200 (or the another electronic device) may also send an in-group message to the electronic device 100 in the foregoing wireless communication manner. This is not limited in this application. In some other embodiments, after the electronic device 100 enters water, the electronic device 100 may also send a join group message to another electronic device by using an acoustic wave signal, and form a group with the another electronic device. This is not limited in this application either.

The following describes another method procedure in which an electronic device 100 joins a group according to an embodiment of this application.

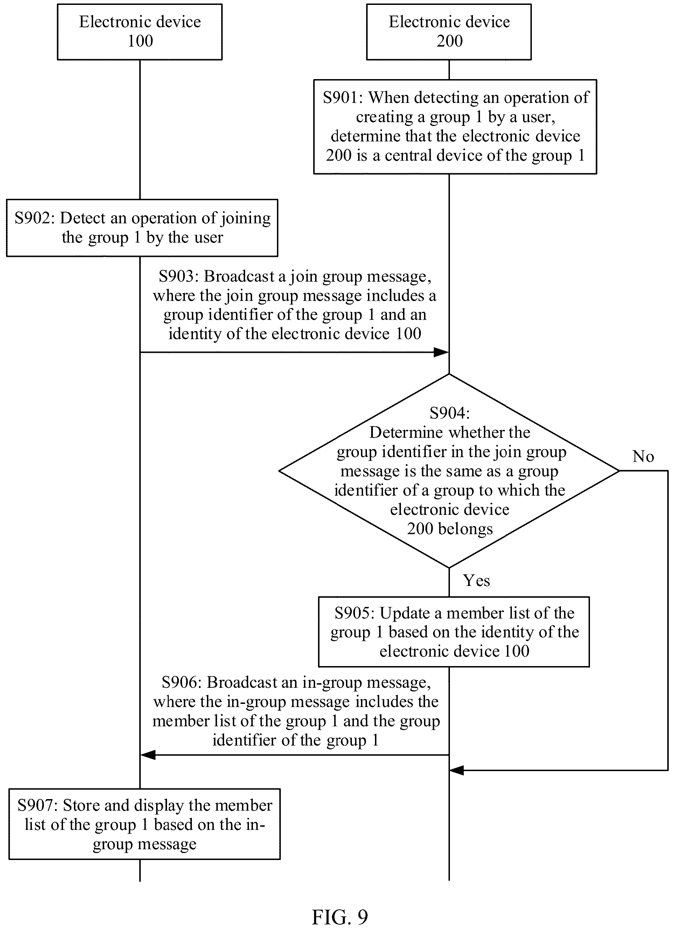

As shown in FIG. 9, a specific procedure in which the electronic device 100 joins a group 1 may include the following steps.

S901: When detecting an operation of creating the group 1 by a user, an electronic device 200 determines that the electronic device 200 is a central device of the group 1.

In some embodiments, the electronic device 200 may receive an operation of creating a group (for example, the group 1) by the user, and in response to the operation, determine the electronic device 200 as a central device of the group.

In some embodiments, a plurality of electronic devices (including the electronic device 200) may also enter a same group ID at the same time to create a same group. In this case, the plurality of electronic devices may determine, based on an identity of each electronic device, an electronic device with a specified identity as the central device. For example, if an identity of the electronic device 200 is "coach", the electronic device 200 may determine the electronic device 200 as the central device based on the identity. After the central device is determined, another device in the group sends a join group message to the central device, where the join group message may include a group identifier and an identity of the electronic device. The central device may receive a plurality of join group messages, and determine and store a member list of the group based on the join group messages.

It may be understood that the foregoing embodiments are merely two examples. In some embodiments, the electronic device 200 may alternatively determine the central device based on another factor. For example, an electronic device with the highest endurance capability is determined as the central device, an electronic device with the highest battery level is determined as the central device, or an electronic device that joins the group earliest is determined as the central device. This is not limited in this application.

S902: The electronic device 100 detects an operation of joining the group 1 by the user.

S903: The electronic device 100 broadcasts a join group message, where the join group message includes a group identifier of the group 1 and an identity of the electronic device 100.

S904: The electronic device 200 determines whether the group identifier in the join group message is the same as a group identifier of a group to which the electronic device 200 belongs.

For specific content of step S902 to step S904, refer to related content of step S801 to step S803 shown in FIG. 8.

When the group identifier of the group 1 is the same as the group identifier of the group to which the electronic device 200 belongs, the electronic device 100 may perform step S905.

When the group identifier of the group 1 is different from the group identifier of the group to which the electronic device 200 belongs, the electronic device 200 may not process the received message.

S905: The electronic device 200 updates a member list of the group 1 based on the identity of the electronic device 100.

After determining that the group to which the electronic device 100 belongs is the same as the group to which the electronic device 200 belongs, the electronic device 200 may add the identity of the electronic device 100 to the member list of the group 1. The member list may include identities of all members in the group 1.

S906: The electronic device 200 broadcasts an in-group message, where the in-group message includes the member list of the group 1 and the group identifier of the group 1.

In some embodiments, the electronic device 200 may broadcast the member list and the group identifier each time after the member list is updated.

In some other embodiments, the electronic device 200 may also check, at a fixed time interval, whether the member list changes, and broadcast the member list and the group identifier if the member list changes, or does not broadcast the member list and the group identifier if the member list does not change. In this way, a plurality of broadcasts caused by a plurality of changes of the member list in a short time can be avoided.

S907: The electronic device 100 stores and displays the member list of the group 1 based on the in-group message.

In this way, only the central device in the group needs to send the member list of the group to an electronic device that newly joins the group, and each electronic device in the group does not need to send the in group message. This reduces power consumption of devices in the group.

It may be understood that FIG. 8 and FIG. 9 merely illustrate two manners in which the electronic device 100 joins the group. In embodiments of this application, the electronic device 100 may alternatively join the group in a manner different from that in the foregoing embodiment. This is not limited in this application.

The following describes a specific procedure of a method for determining a change of a distance between an electronic device 100 and an electronic device 200 based on underwater communication according to an embodiment of this application.

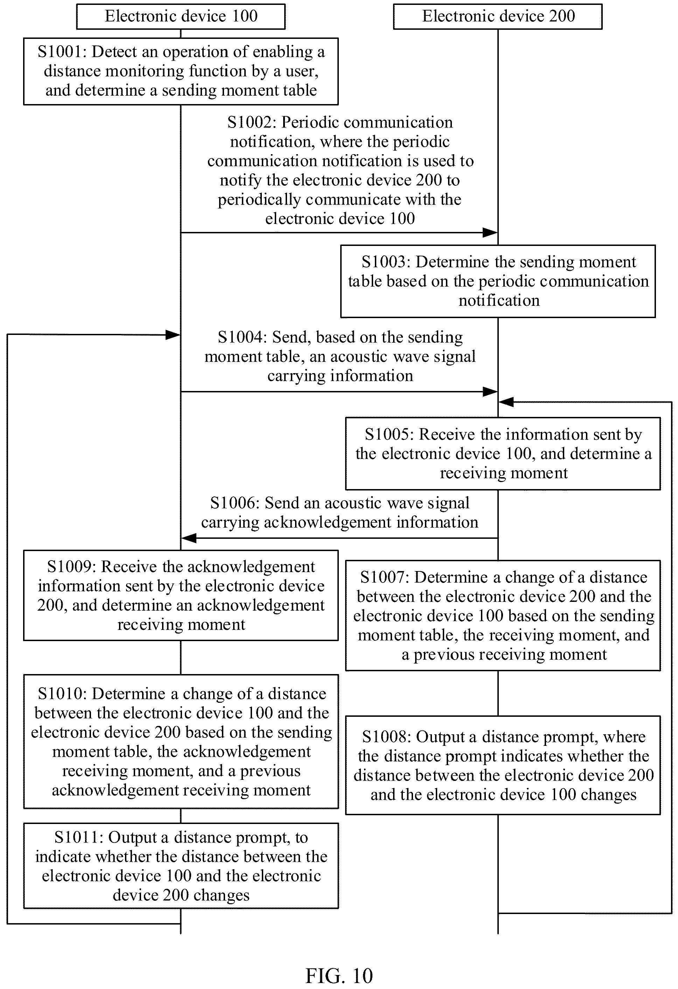

As shown in FIG. 10, a procedure of the method for determining the change of the distance between the electronic device 100 and the electronic device 200 based on underwater communication may include the following steps.

S1001: The electronic device 100 detects an operation of enabling a distance monitoring function by a user, and determines a sending moment table.

In some embodiments, the operation of enabling the distance monitoring function by the user may be a tap operation on a specified distance monitoring switch, or may be an operation of setting an information sending period by the user, for example, an operation on the time setting option 552 in the embodiment shown in FIG. 5F. In some embodiments, the electronic device 100 may also synchronously enable the distance monitoring function by default when enabling an underwater communication function, and monitor a change of a distance between the electronic device 100 and a specified electronic device (or each electronic device in a group) in real time after the electronic device 100 enters water.

In some embodiments, the sending moment table may include a plurality of sending moments, and each sending moment indicates a moment at which the electronic device 100 sends information, and a time interval between any two adjacent sending moments is an information sending period of the electronic device 100. In some other embodiments, the sending moment table may also include a start moment and an information sending period, and the start moment is a moment at which the electronic device 100 sends the first piece of information.

For example, FIG. 8 shows a sending moment table according to an embodiment of this application.

**Table 8**

| Sending sequence | Sending moment |
|---|---|
| 1 | 10:05 |
| 2 | 10:10 |
| 3 | 10:15 |
| 4 | 10:20 |

As shown in Table 8, the sending moment table may include the sending sequence and the sending moment, and the sending sequence and the sending moment are in one-to-one correspondence. It can be learned from Table 8 that, a moment at which the electronic device 100 sends information for the first time is 10:05, a moment at which the electronic device 100 sends information for the second time is 10:10, a moment at which the electronic device 100 sends information for the third time is 10:15, a moment at which the electronic device 100 sends information for the fourth time is 10:20, and the like.

For another example, FIG. 9 shows another sending moment table according to an embodiment of this application.

**Table 9**

| Information sending period | 5 minutes |
|---|---|
| Start moment | 10:05 |

As shown in Table 9, the sending moment table stored in the electronic device 100 may include the information sending period and the start moment. The information sending period is 5 minutes, and the start moment is 10:05.

It may be understood that Table 8 and Table 9 are merely examples of two sending moment tables. In embodiments of this application, the sending moment table may include more or less content than that in Table 8 and Table 9 or different content from that in Table 8 and Table 9. This is not limited in this application.

In some embodiments, the operation of enabling the distance monitoring function by the user may include the operation of setting the information sending period and/or an operation of setting a peer device that receives information. It should be noted that, before setting the peer device (for example, the electronic device 200), the electronic device 100 needs to obtain an identity of the peer device. For example, when the electronic device 100 and the electronic device 200 belong to a same group, the electronic device 100 may set the electronic device 200 as the peer device that receives the information.

When the user sets the information sending period and does not set the peer device that receives the information, the electronic device 100 may determine the sending moment table based on the identity of the electronic device 100 and the information sending period. For example, the electronic device 100 may obtain, based on the identity of the electronic device 100 by using a hash algorithm, a start moment for sending information, and then obtain a sending moment table based on the information sending period and the start moment.

When the user sets the peer device (for example, the electronic device 200) that receives the information and does not set the information sending period, the electronic device 100 may obtain the sending moment table based on the identity of the electronic device 100 and the identity of the electronic device 200 by using the hash algorithm (or another algorithm).

When the user sets the information sending period and sets the peer device that receives the information, the electronic device 100 may determine the sending moment table based on the identity of the electronic device 100, the identity of the electronic device 200, and the information sending period.

In some other embodiments, the operation of enabling the distance monitoring function by the user may also be the operation on the distance monitoring switch. In this case, the electronic device 100 may determine the sending moment table based on the identity of the electronic device 100 by using an algorithm like the hash algorithm.

S1002: The electronic device 100 sends a periodic communication notification to the electronic device 200, where the periodic communication notification is used to notify the electronic device 200 to periodically communicate with the electronic device 100.

The electronic device 100 may send the periodic communication notification in response to the operation of enabling the distance monitoring function by the user. It should be noted that, if the operation of enabling the distance monitoring function by the user is performed before the electronic device 100 enters water, the electronic device 100 may broadcast the periodic communication notification in a wireless communication manner like Bluetooth, or separately send the periodic communication notification to a plurality of electronic devices that establish a communication connection. If the operation of enabling the distance monitoring function by the user is performed after the electronic device 100 enters water, the electronic device 100 may send the periodic communication notification by using an acoustic wave signal or the like.

In some embodiments, the periodic communication notification may include the identity of the electronic device 100, and is used to notify the electronic device 200 to periodically communicate with the electronic device 100.

In some other embodiments, the periodic communication notification may include the identity of the electronic device 100 and the sending moment table. In this case, the periodic communication notification may be used to notify the electronic device 200 that the electronic device 100 is to send the information to the electronic device 200 at the sending moment indicated by the sending moment table.

Optionally, when the user sets the peer device that receives the information, the periodic communication notification may further include the identity of the peer device.

S1003: The electronic device 200 determines the sending moment table based on the periodic communication notification.

In some embodiments, the periodic communication notification may include the sending moment table. In this case, the electronic device 200 may obtain the sending moment table from the periodic communication notification.

In some embodiments, the periodic communication notification does not include the sending moment table. In this case, the electronic device 200 may obtain the sending moment table based on the identity of the electronic device 100 in the periodic communication notification by using the hash algorithm (or another algorithm).

In some embodiments, if the periodic communication notification may further include the identity of the electronic device 200, the electronic device 200 may also determine the sending moment table based on the identity of the electronic device 100 and the identity of the electronic device 200 by using the algorithm like the hash algorithm.

S1004: The electronic device 100 sends, based on the sending moment table, an acoustic wave signal carrying information.

After determining the sending moment table, the electronic device 100 may periodically send, based on the sending moment table, the acoustic wave signal carrying the information.

In some embodiments, the information sent by the electronic device 100 each time may be the same. In some other embodiments, the information sent by the electronic device 100 each time may be different. For example, the information sent each time may carry the sending sequence, and the sending sequence may be used to determine a sending moment of the information.

S1005: The electronic device 200 receives the information sent by the electronic device 100, and determines a receiving moment.

When the electronic device 200 receives the acoustic wave signal that carries the target information and that is sent by the electronic device 100, the electronic device 200 may determine a receiving moment at which the acoustic wave signal is received this time.

S1006: The electronic device 200 sends an acoustic wave signal carrying acknowledgement information to the electronic device 100.

In some embodiments, the acknowledgement information sent by the electronic device 200 each time may be the same. In some other embodiments, the acknowledgement information sent by the electronic device 200 each time may be different. For example, the acknowledgement information sent each time may carry the sending sequence, and the like.

S1007: The electronic device 200 determines a change of a distance between the electronic device 200 and the electronic device 100 based on the sending moment table, the receiving moment, and a previous receiving moment.

The electronic device 200 may determine, based on the sending moment table and a current receiving moment, a transmission time 1 consumed for propagating, from the electronic device 100 to the electronic device 200, an acoustic wave signal sent by the electronic device 100 this time. The electronic device 200 may further determine, based on the sending moment table and a previous receiving moment, a transmission time 2 consumed for propagating, from the electronic device 100 to the electronic device 200, an acoustic wave signal sent by the electronic device 100 last time. By comparing the transmission time 1 with the transmission time 2, a change of the distance between the electronic device 200 and the electronic device 100 may be determined.

If the transmission time 1 is less than the transmission time 2, it may be determined that the distance between the electronic device 200 and the electronic device 100 decreases.

If the transmission time 1 is greater than the transmission time 2, it may be determined that the distance between the electronic device 200 and the electronic device 100 increases.

If the transmission time 1 is equal to the transmission time 2, it may be determined that the distance between the electronic device 200 and the electronic device 100 remains unchanged.

In some embodiments, the electronic device 200 may further determine, based on a difference between the transmission time 1 and the transmission time 2 and a transmission speed of the acoustic wave signal in water, a specific value of the change of the distance between the electronic device 200 and the electronic device 100.

S1008: The electronic device 200 outputs a distance prompt, where the distance prompt indicates whether the distance between the electronic device 200 and the electronic device 100 changes.

The electronic device 200 may output the distance prompt in one or more manners such as sound, vibration, text, pattern, animation, and indicator blinking. The distance prompt may indicate whether the distance between the electronic device 200 and the electronic device 100 changes. Optionally, the distance prompt may further prompt the specific value of the change of the distance between the electronic device 200 and the electronic device 100.

It should be noted that, after the distance prompt is output, the electronic device 200 may re-perform step S1005 and subsequent steps when receiving information sent by the electronic device 100 again.

S1009: The electronic device 100 receives the acknowledgement information sent by the electronic device 200, and determines an acknowledgement receiving moment.

For specific content of step S1009, refer to related descriptions of step S1005.

S1010: The electronic device 100 determines a change of a distance between the electronic device 100 and the electronic device 200 based on the sending moment table, the acknowledgement receiving moment, and a previous acknowledgement receiving moment.

S1011: The electronic device 100 outputs a distance prompt, to indicate whether the distance between the electronic device 100 and the electronic device 200 changes.

For specific content of step S1010 and step S1011, refer to related descriptions of step S1007 and step S1008.

According to the underwater communication method provided in embodiments of this application, the electronic device 100 may determine a change of a distance between the electronic device 100 and another electronic device, to facilitate group management and reduce diving risks.

In some embodiments, after enabling the distance monitoring function, a sending moment may be carried in each sent acoustic wave signal, and received acknowledgement information may also carry a sending moment of the acknowledgement information. In this way, the electronic device 100 may also determine a current distance between the electronic device 100 and another electronic device (for example, the electronic device 200) based on the sending moment and a receiving moment of the acknowledgement information, and compare a distance measured each time to determine a change of a distance between the electronic device 100 and the electronic device 200. Similarly, the electronic device 200 as a receiver may also determine a change of the distance between the electronic device 100 and the electronic device 200 in a similar manner. This is not limited in this application.

It should be noted that, in some embodiments, in the embodiments shown in FIG. 8 and FIG. 10, the electronic device 100 and the electronic device 200 may also exchange roles. To be specific, the electronic device 100 may perform the steps performed by the electronic device 200 in the foregoing embodiments, and in this case, the electronic device 200 may also perform the steps performed by the electronic device 100 in the foregoing embodiments. This is not limited in this application.

In some other embodiments, step S1002 and step S1003 shown in FIG. 10 may also be replaced with the following steps:
S1002a: After detecting an operation of setting, by the user, to periodically receive information, the electronic device 200 determines a sending moment table based on the operation of the user.

The electronic device 200 may determine the sending moment table based on the identity of the electronic device 100 and the identity of the electronic device 200 after detecting the operation of setting by the user, to periodically receive information from the electronic device 100. Optionally, if the user sets an information receiving period, the electronic device 200 may further determine the sending moment table based on the information receiving period set by the user.

For a specific manner in which the electronic device 200 determines the sending moment table, refer to related descriptions of step S1001 shown in FIG. 10.

It should be noted that, in this case, the electronic device 200 and the electronic device 100 need to belong to a same group, or the electronic device 200 needs to obtain the identity of the electronic device 100.

In some other embodiments, the electronic device 100 and the electronic device 200 may store priorities of different identities. For example, priorities of coach 1, trainee 2, trainee 1, and dive buddy 1 are arranged as follows: coach 1>dive buddy 1>trainee 1>trainee 2. When both the electronic device 100 and the electronic device 200 detect an operation of setting, by the user, to periodically send information to each other, the electronic device 100 (or the electronic device 200) may determine, based on the identity of the electronic device 100 and the identity of the electronic device 200, an electronic device with a higher priority as a sender of the information, and the other electronic device as a receiver of the information. For example, after determining that the electronic device 100 is the sender of the information and the electronic device 200 is the receiver of the information, the electronic device 100 and the electronic device 200 may perform related steps in the embodiment shown in FIG. 10, to monitor a change of a distance between the electronic device 100 and the electronic device 200 in real time.

In this way, when the receiver of the information and the sender of the information are not set, the electronic device 100 may determine the sender of the information based on a priority of an identity.

In some other embodiments, if the electronic device 100 sends information to the electronic device 200 at a fixed time interval, and duration in which the electronic device 200 does not receive the information sent by the electronic device 100 reaches disconnection duration (for example, 15 minutes or 20 minutes), the electronic device 200 may output a rescue prompt, to indicate to the user that the user of the electronic device 100 may encounter an emergency. Similarly, if duration in which the electronic device 100 does not receive acknowledgement information of the electronic device 200 reaches disconnection duration (for example, 5 minutes or 15 minutes), the electronic device 100 may also output a rescue prompt, to indicate to the user that the user of the electronic device 200 may encounter an emergency.

In this way, when the user is disconnected, the companion can be reminded in a timely manner to search for the user.

The following describes a diagram of functional modules of the electronic device 100 according to an embodiment of this application.

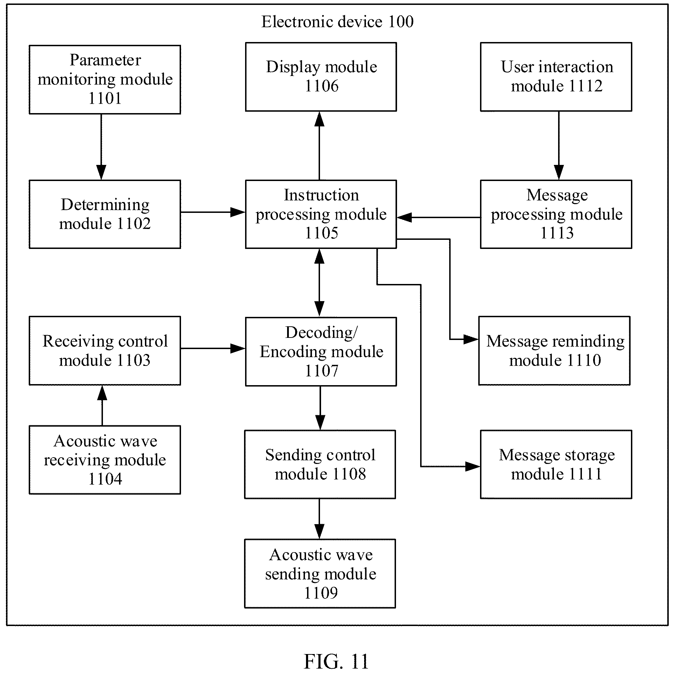

As shown in FIG. 11, the electronic device 100 may include a parameter monitoring module 1101, a determining module 1102, a receiving control module 1103, an acoustic wave receiving module 1104, an instruction processing module 1105, a display module 1106, a decoding/encoding module 1107, a sending control module 1108, an acoustic wave sending module 1109, a message reminding module 1110, a message storage module 1111, a user interaction module 1112, a message processing module 1113, and the like.

The parameter monitoring module 1101 may perform diving monitoring, and monitor any one or more of parameters such as a physiological parameter, an environmental equipment parameter, and a diving status parameter of a user. The parameter monitoring module 1101 may further send a monitoring result (namely, a diving monitoring result) to the determining module 1102.

The determining module 1102 may store one or more information sending conditions (including an information sending condition 1), and may further determine whether the diving monitoring result meets an information sending condition. The determining module 1102 may further store preset information and a correspondence between an information sending condition and preset information. When determining that the diving monitoring result meets the information sending condition 1, the determining module 1102 may send an information sending instruction to the instruction processing module 1105, to indicate sending of preset information 1 corresponding to the information sending condition 1.

The acoustic wave receiving module 1104 may receive an acoustic wave signal, and send the received acoustic wave signal to the receiving control module 1103.

After receiving the acoustic wave signal, the receiving control module 1103 may send the acoustic wave signal to the decoding/encoding module 1107.

The instruction processing module 1105 may determine target information in response to the information sending instruction, where the target information includes the preset information 1 and an identity of the electronic device 100. Optionally, the target information may further include other content such as a group identifier. The instruction processing module 1105 may send the target information to the decoding/encoding module 1107. The instruction processing module 1105 may further receive decoded received information sent by the decoding/encoding module 1107, and send the received information to the display module 1106. In some embodiments, after receiving the received information, the instruction processing module 1105 may further send a reminding instruction to the message reminding module 1110, to indicate the message reminding module 1110 to output a message reminder. In addition, after receiving the received information, the instruction processing module 1105 may further send the received information to the message storage module 1111.

The display module 1106 may display the received information.

The decoding/encoding module 1107 may perform encoding processing on the target information sent by the instruction processing module, and send the encoded target information to the sending control module 1108.

The sending control module 1108 may control, based on the received encoded target information, the acoustic wave sending module 1109 to generate a corresponding acoustic wave signal, where the acoustic wave signal carries the target information.

The acoustic wave sending module 1109 may generate the acoustic wave signal carrying the target information.

The message reminding module 1110 may output the message reminder in response to the reminding instruction sent by the instruction processing module 1105, to indicate to the user that the electronic device 100 receives the information.

The message storage module 1111 may receive and store the received information sent by the instruction processing module 1105.

The user interaction module 1112 may be configured to receive an operation performed by the user on the electronic device 100, for example, a touch operation on a display, a rotation operation on a button, or a press operation on a button. The user interaction module 1112 may receive an operation of setting the identity of the electronic device 100 by the user, and may also receive an operation of joining a group by the user, an operation of enabling an underwater communication mode, an operation of sending information, and the like. When receiving the operation of sending the information by the user, the user interaction module 1112 may determine, based on the operation of the user, to-be-sent preset information (for example, the preset information 1) of the user, and send the preset information 1 to the message processing module 1113.

The message processing module 1113 may send the information sending instruction to the instruction processing module 1105, where the information sending instruction may include the preset information 1.

It may be understood that the embodiment shown in FIG. 11 is merely an example. In embodiments of this application, the electronic device 100 may further include more or fewer functional modules than those in the foregoing embodiment or different functional modules from those in the foregoing embodiment, or the plurality of foregoing modules may be combined into one module, or any one of the foregoing modules may be divided into a plurality of modules. This is not limited in this application.

In addition, in the underwater communication system 10, for functional modules of the electronic device 200 (or another electronic device), refer to related descriptions in the embodiment shown in FIG. 11. Details are not described herein again.

The following describes another underwater communication system 20 according to an embodiment of this application.

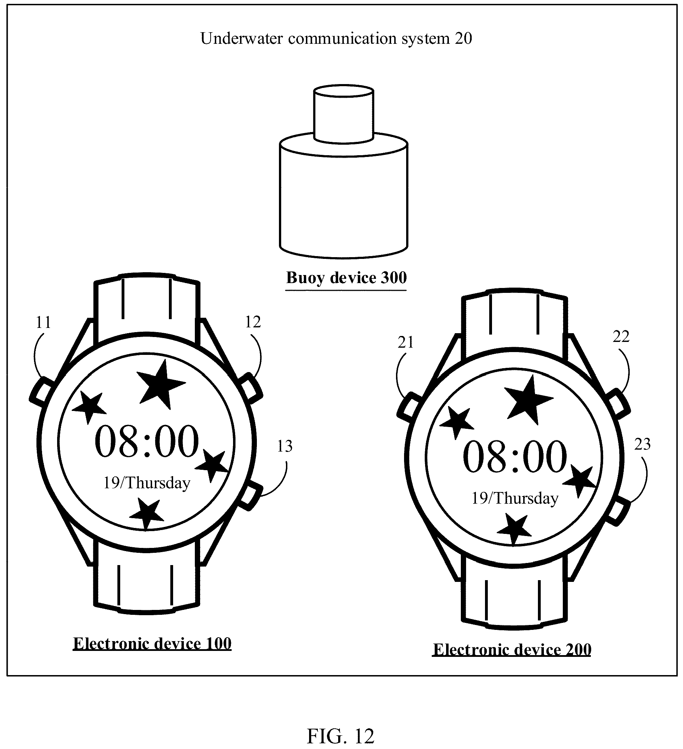

As shown in FIG. 12, the underwater communication system 20 may include an electronic device 100, an electronic device 200, and a buoy device 300. Optionally, the underwater communication system 20 may further include one or more other electronic devices.

The buoy device 300 floats at a fixed location on a water surface, a part of the buoy device 300 is located above the water surface, and the other part is located below the water surface. The buoy device 300 may perform underwater communication with an electronic device (for example, the electronic device 100 and the electronic device 200) in water by using an acoustic wave signal. The buoy device 300 may also communicate, in a wireless communication manner like Bluetooth or a wireless local area network, with an electronic device (or a base station or the like) that does not enter water in the underwater communication system 20. The buoy device 300 may store location information of the buoy device 300. The buoy device 300 may communicate with the electronic device 100, and position the electronic device 100 based on data such as a signal propagation time. In some embodiments, the buoy device 300 may be provided with a plurality of sound pickup modules in different directions, and the sound pickup modules in the different directions may be configured to determine a propagation direction of a received acoustic wave signal.

The electronic device 100 (or the electronic device 200) may also store the location information of the buoy device 300. The electronic device 100 may alternatively determine the location information of the electronic device 100 by communicating with the buoy device 300. The electronic device 100 may further obtain a movement trajectory of the electronic device 100 relative to the buoy device 300 by using a sensor like a gyroscope sensor or an acceleration sensor.

The electronic device 200 (or another electronic device) may also determine the location information of the electronic device 200 by communicating with the buoy device 300.

In the underwater communication system 20, for other specific content of the electronic device 100 and the electronic device 200, refer to related descriptions of the underwater communication system 10 shown in FIG. 1A. Details are not described herein again.

It may be understood that the foregoing embodiment shown in FIG. 12 is merely an example. In embodiments of this application, the underwater communication system 20 may further include more electronic devices or buoy devices. This is not limited in this application.

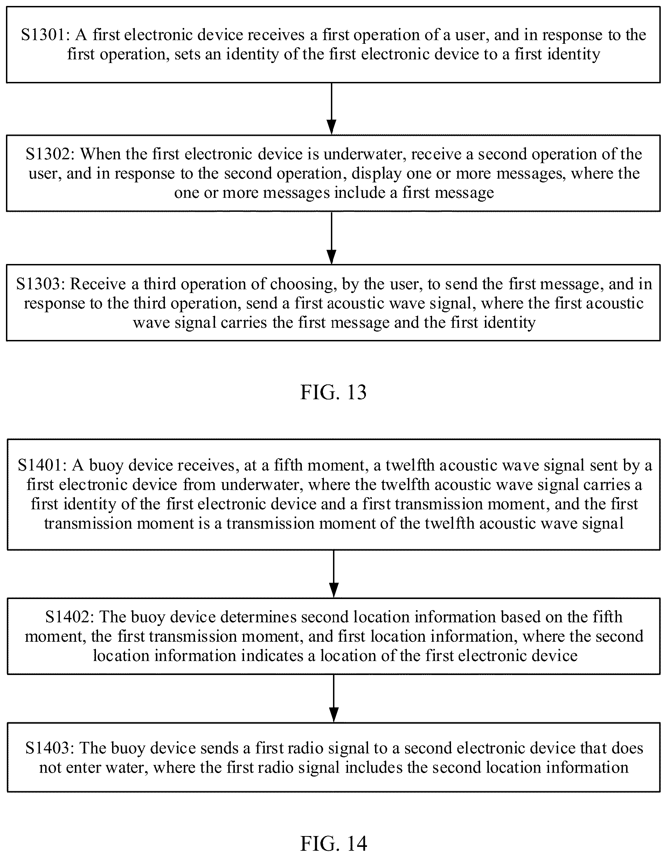

FIG. 13 is a schematic flowchart of an underwater communication method according to an embodiment of this application.

As shown in FIG. 13, a procedure of the underwater communication method provided in embodiments of this application may include the following steps.

S1301: A first electronic device receives a first operation of a user, and in response to the first operation, sets an identity of the first electronic device to a first identity.

The first electronic device may be the electronic device 100 in the foregoing embodiments.

In a possible implementation, the first operation is an operation of selecting the first identity by the user; and the method further includes: displaying an identity list before receiving the first operation, where the identity list includes a plurality of identities, and the plurality of identities include the first identity. For example, the identity list may include the one or more identities displayed in the identity selection interface 240 shown in FIG. 2E, and the first identity may be "Coach 1".

In a possible implementation, the first operation is an operation of inputting the first identity by the user.

For other related content of step S1301, refer to related descriptions of step S601 in the embodiment shown in FIG. 6A.

S1302: When the first electronic device is underwater, receive a second operation of the user, and in response to the second operation, display one or more messages, where the one or more messages include a first message.

In some embodiments, the one or more messages may be the one or more pieces of preset information in the embodiment shown in FIG. 6A.

In a possible implementation, before the second operation is received, the method further includes: The first electronic device detects that the first electronic device is underwater.

In a possible implementation, the first electronic device further includes a first button, and the second operation is an operation performed by the user on the first button.

S1303: Receive a third operation of choosing, by the user, to send the first message, and in response to the third operation, send a first acoustic wave signal, where the first acoustic wave signal carries the first message and the first identity.

In some embodiments, the first message may be the preset information 1 in the embodiment shown in FIG. 6A.

In a possible implementation, the first electronic device further includes a second button and a third button; and receiving the third operation of choosing, by the user, to send the first message, and in response to the third operation, sending the first acoustic wave signal specifically includes: receiving an operation performed by the user on the second button, and in response to the operation performed by the user on the second button, displaying a selection indicator on the first message, where the selection indicator indicates to the user that the first message is selected; and receiving an operation performed by the user on the third button, and in response to the operation performed by the user on the third button, sending the first acoustic wave signal.

For example, the second button may be the button 12 in the embodiment shown in FIG. 1A, and the third button may be the button 13 in the embodiment shown in FIG. 1A.

In a possible implementation, the first electronic device may include the first button; the second operation is a press operation performed by the user on the first button; the third operation is a rotation operation performed by the user on the first button; or the third operation is a press operation performed by the user on the first button.

In another possible implementation, in a possible implementation, the first electronic device may include the first button and the second button; the second operation is a press operation performed by the user on the first button; the third operation is a rotation operation performed by the user on the second button; or the third operation is a press operation performed by the user on the second button.

It may be understood that the foregoing plurality of implementations are merely examples. The first electronic device may include one or more buttons, and operation manners of the second operation and the third operation may also be other operation manners. This is not limited in this application.

For other related content of step S1302 and step S1303, refer to related descriptions of step S606 to step S608 in the embodiment shown in FIG. 6A.

Compared with a conventional wireless communication manner, the underwater communication method provided in embodiments of this application has a longer propagation distance. In addition, sent information carries an identity, used to notify a receiver of an identity of a sender of the information.

In some embodiments, the first electronic device may also send, when detecting that any one or more parameters such as a physiological parameter, an environmental equipment parameter, and a diving status parameter of the user meet a specific condition (for example, greater than or less than a specific threshold, outside a preset range, or within the preset range), an acoustic wave signal carrying an identity and corresponding information. The corresponding information may be used to notify the receiver of a current status of the user of the first electronic device. For a specific correspondence between a condition and a message, refer to related descriptions in the embodiment shown in FIG. 6A. Details are not described herein again.

In a possible implementation, the first acoustic wave signal further carries a first group identifier, and the first group identifier indicates that the first electronic device belongs to a first group; and the method further includes: before receiving the second operation, receiving a fourth operation of joining the first group by the user; broadcasting the first group identifier and the first identity in response to the fourth operation; receiving the first group identifier and a second identity that are sent by a second electronic device, where the second identity is an identity of the second electronic device; and displaying a member list of the first group, where the member list includes the first identity and the second identity.

In some embodiments, the first group identifier may be the identifier of the group 1 in the foregoing embodiments. The member list of the first group may be the member list of the group 1 in the foregoing embodiments. The fourth operation may be an operation of entering the identifier (for example, a group ID) of the group 1 by the user. In the foregoing implementation, the first electronic device may be the electronic device 100 shown in FIG. 8, and the second electronic device may be the electronic device 200 shown in FIG. 8.

In this way, electronic devices in a same group can communicate with each other.

In a possible implementation, the first acoustic wave signal further carries a first group identifier, and the first group identifier indicates that the first electronic device belongs to a first group. The method further includes: before receiving the second operation, receiving a fifth operation of creating the first group by the user; broadcasting the first group identifier and the first identity in response to the fifth operation; receiving the first group identifier and the second identity that are sent by the second electronic device, where the second identity is an identity of the second electronic device; and broadcasting the first group identifier and a member list of the first group, where the member list includes the first identity and the second identity.

In some embodiments, the fifth operation may be an operation of entering the group identifier of the first group by the user. In this case, the first electronic device may be the electronic device 200 shown in FIG. 9, and the second electronic device may be the electronic device 100 shown in FIG. 9.

In some other possible implementations, the first electronic device may also determine, based on any one or more of the identity (for example, the coach) of the first electronic device, a device endurance capability (for example, a battery level), a time sequence of joining the group, and the like, that the first electronic device is the central device of the group. This is not limited in this application.

In a possible implementation, the method further includes: displaying sixth information and the second identity when receiving a sixth acoustic wave signal sent by the second electronic device, where the sixth acoustic wave signal carries the sixth information, the first group identifier, and the second identity; and skipping displaying seventh information when receiving a seventh acoustic wave signal sent by a third electronic device, where the seventh sound carries the seventh information and a third identity, the third identity is an identity of the third electronic device, and the third electronic device does not belong to the first group.

In this way, when a message sent by an electronic device that does not belong to a same group is received, the message may not be displayed.

In a possible implementation, the method further includes: sending an eighth acoustic wave signal at a first moment when the first electronic device is underwater, where the eighth acoustic wave signal carries the first identity and the first moment; receiving, at a second moment, a ninth acoustic wave signal sent by the second electronic device, where the ninth acoustic wave signal is an acoustic wave signal sent by the second electronic device when the second electronic device receives the eighth acoustic wave signal, and the ninth acoustic wave signal carries a transmission moment of the ninth acoustic wave signal and the second identity of the second electronic device; and in response to the ninth acoustic wave signal, outputting distance information based on the transmission moment of the ninth acoustic wave signal and the second moment, where the distance information indicates a distance between the first electronic device and the second electronic device.

In this way, the first electronic device may determine the distance between the first electronic device and the second electronic device in real time, to facilitate determining a distance between the first electronic device and the companion, and improve diving safety.

In a possible implementation, the method further includes: sending an eighth acoustic wave signal at a first moment when the first electronic device is underwater, where the eighth acoustic wave signal carries the first identity; receiving, at a second moment, a ninth acoustic wave signal sent by the second electronic device, where the ninth acoustic wave signal is an acoustic wave signal sent by the second electronic device when the second electronic device receives the eighth acoustic wave signal, and the ninth acoustic wave signal carries the second identity of the second electronic device; sending a tenth acoustic wave signal at a third moment, where the tenth acoustic wave signal carries the first identity; receiving, at a fourth moment, an eleventh acoustic wave signal sent by the second electronic device, where the eleventh acoustic wave signal is an acoustic wave signal sent by the second electronic device when the second electronic device receives the tenth acoustic wave signal, and the eleventh acoustic wave signal carries the second identity of the second electronic device; and outputting a distance prompt based on a first time interval and a second time interval, where the distance prompt prompts the user with a change of a distance between the first electronic device and the second electronic device, the first time interval is a time interval between the first moment and the second moment, and the second time interval is a time interval between the third moment and the fourth moment.

In this way, the first electronic device may determine a change of the distance between the first electronic device and the second electronic device in real time, thereby improving diving safety.

In a possible implementation, outputting the distance prompt based on the first time interval and the second time interval specifically includes: outputting a first distance prompt when the first time interval is greater than the second time interval, where the first distance prompt indicates to the user that the distance between the first electronic device and the second electronic device decreases; and outputting a second distance prompt when the first time interval is less than the second time interval, where the second distance prompt indicates to the user that the distance between the first electronic device and the second electronic device increases.

In this way, a distance prompt may be output in real time, to indicate whether a distance between two electronic devices increases or decreases.

In a possible implementation, before sending the eighth acoustic wave signal, the method further includes: The first electronic device receives an operation of enabling a distance monitoring function by the user, and in response to the operation, enables the distance monitoring function.

For the operation of enabling the distance monitoring function by the user, refer to related descriptions of step S1001 in the embodiment shown in FIG. 10.

In this way, after the distance monitoring function is enabled, the first electronic device may monitor the distance between the first electronic device and the second electronic device in real time.

In another possible implementation, the first electronic device can monitor the distance between the first electronic device and the second electronic device in real time without a manual operation of the user.

In a possible implementation, the method further includes: displaying a first prompt before receiving the first operation, where the first prompt indicates to the user that no identity is set for the first electronic device; and receiving the first operation of the user, and in response to the first operation, setting the identity of the first electronic device to the first identity specifically includes: receiving the first operation of the user, and in response to the first operation, displaying a second prompt, where the second prompt indicates to the user that the identity of the first electronic device is the first identity.

In this way, the first electronic device may set the identity based on an operation of the user.

For example, the first prompt may be the identity prompt 232a in the embodiment shown in FIG. 2D, and the second prompt may be the identity prompt 232a in the embodiment shown in FIG. 2F.

FIG. 14 is a schematic flowchart of another underwater communication method according to an embodiment of this application.

As shown in FIG. 14, a specific procedure of the underwater communication method may include the following steps.

S1401: A buoy device receives, at a fifth moment, a twelfth acoustic wave signal sent by a first electronic device from underwater, where the twelfth acoustic wave signal carries a first identity of the first electronic device and a first transmission moment, and the first transmission moment is a transmission moment of the twelfth acoustic wave signal.

The buoy device may be the buoy device 300 in the embodiment shown in FIG. 12, and the first electronic device may be the electronic device 100 in the embodiment shown in FIG. 12.

The buoy device may store first location information, and the first location information may indicate a location of the buoy device.

S1402: The buoy device determines second location information based on the fifth moment, the first transmission moment, and the first location information, where the second location information indicates a location of the first electronic device.

In some embodiments, the second location information may be a distance between the first electronic device and the buoy device. The buoy device may determine the distance between the first electronic device and the buoy device based on the fifth moment and the first transmission moment.

In some embodiments, the buoy device may store a preset three-dimensional coordinate system, and the first location information may be coordinates of the buoy device in the three-dimensional coordinate system. The second location information may also be coordinates in the three-dimensional coordinate system. In this case, the buoy device may determine the second location information based on the fifth moment, the first transmission moment, and the first location information.

S1403: The buoy device sends a first radio signal to a second electronic device that does not enter water, where the first radio signal includes the second location information.

The second electronic device may be an electronic device that does not enter water. In some embodiments, the second electronic device may alternatively be replaced with a base station or the like.

The first radio signal may be a signal propagated in a conventional wireless communication manner like Wi-Fi or Bluetooth.

In this way, location information of an underwater electronic device may be sent to an onshore electronic device through the buoy device, so that the onshore electronic device determines a location of the underwater electronic device.

In a possible implementation, the method further includes: sending a thirteenth acoustic wave signal to the first electronic device after determining the second location information, where the thirteenth acoustic wave signal carries the second location information.

In this way, the buoy device may also send location information of the first electronic device to the first electronic device, so that a user of the first electronic device determines a location of the user.

Implementations of this application may be randomly combined to achieve different technical effects.

All or some of the foregoing embodiments may be implemented by software, hardware, firmware, or any combination thereof. When the software is used to implement the foregoing embodiments, all or a part of the foregoing embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the procedures of the methods in the foregoing embodiments may be implemented by a computer program instructing related hardware. The program may be stored in a computer-readable storage medium. When the program is executed, the procedures of the method embodiments may be included. The foregoing storage medium includes any medium that can store program code, such as a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. An underwater communication method, applied to a first electronic device, wherein the method comprises:
receiving a first operation of a user, and in response to the first operation, setting an identity of the first electronic device to the first identity;
when the first electronic device is underwater, receiving a second operation of the user, and in response to the second operation, displaying one or more messages, wherein the one or more messages comprise a first message; and
receiving a third operation of choosing, by the user, to send the first message, and in response to the third operation, sending a first acoustic wave signal, wherein the first acoustic wave signal carries the first message and the first identity.

2. The method according to claim 1, wherein the first operation is an operation of selecting the first identity by the user; and the method further comprises:
displaying an identity list before receiving the first operation, wherein the identity list comprises a plurality of identities, and the plurality of identities comprise the first identity.

3. The method according to claim 1 or 2, wherein the first electronic device further comprises a first button; and the second operation is an operation performed by the user on the first button.

4. The method according to any one of claims 1 to 3, wherein the first electronic device further comprises a second button and a third button; and receiving the third operation of choosing, by the user, to send the first message, and in response to the third operation, sending the first acoustic wave signal specifically comprises:
receiving an operation performed by the user on the second button, and in response to the operation performed by the user on the second button, displaying a selection indicator on the first message, wherein the selection indicator indicates to the user that the first message is selected; and
receiving an operation performed by the user on the third button, and in response to the operation performed by the user on the third button, sending the first acoustic wave signal.

5. The method according to any one of claims 1 to 4, wherein the method further comprises:
monitoring a first physiological parameter of the user, wherein the first physiological parameter is any one of the following: body temperature, heart rate, blood pressure, blood oxygen saturation, or central nervous system toxin concentration; and
sending a second acoustic wave signal when the first electronic device is underwater and it is obtained through monitoring that the first physiological parameter is outside a first range, wherein the second acoustic wave signal carries the second information and the first identity, and the second information is used to notify a receiver that the first physiological parameter of the user of the first electronic device is abnormal.

6. The method according to any one of claims 1 to 5, wherein the method further comprises:
monitoring a first environmental equipment parameter, wherein the first environmental equipment parameter is any one of the following: water temperature, water depth, water current speed, ambient light intensity, water pressure, remaining oxygen, remaining safe duration, no-decompression limit, or diving duration; and
sending a third acoustic wave signal when the first electronic device is underwater and it is obtained through monitoring that the first environmental equipment parameter is outside a second range, wherein the third acoustic wave signal carries the third information and the first identity, and the third information is used to notify the receiver that the first environmental equipment parameter of the first electronic device is abnormal.

7. The method according to claim 6, wherein the method further comprises:
monitoring a diving status, wherein the diving status comprises any one or more of the following: ascent, descent, or stop; and
sending a fourth acoustic wave signal when the first environmental equipment parameter reaches a first value, wherein the fourth acoustic wave signal carries the fourth information and the first identity, the fourth information comprises the first environmental equipment parameter and a first diving status, and the first diving status is a diving status of the first electronic device.

8. The method according to any one of claims 1 to 7, wherein the method further comprises:
monitoring a first diving parameter, wherein the first diving parameter is any one of the following: stop duration, ascent rate, or descent rate; and
sending a fifth acoustic wave signal when the first electronic device is underwater and it is obtained through monitoring that the first diving parameter is outside a third range, wherein the fifth acoustic wave signal carries the fifth information and the first identity, and the fifth information is used to notify the receiver that the first diving parameter of the first electronic device is abnormal.

9. The method according to any one of claims 1 to 8, wherein the first acoustic wave signal further carries the first group identifier, and the first group identifier indicates that the first electronic device belongs to a first group; and the method further comprises:
before receiving the second operation, receiving a fourth operation of joining the first group by the user;
broadcasting the first group identifier and the first identity in response to the fourth operation;
receiving the first group identifier and a second identity that are sent by the second electronic device, wherein the second identity is an identity of the second electronic device; and
displaying a member list of the first group, wherein the member list comprises the first identity and the second identity.

10. The method according to any one of claims 1 to 8, wherein the first acoustic wave signal further carries the first group identifier, and the first group identifier indicates that the first electronic device belongs to a first group; and the method further comprises:
before receiving the second operation, receiving a fifth operation of creating the first group by the user;
broadcasting the first group identifier and the first identity in response to the fifth operation;
receiving the first group identifier and a second identity that are sent by the second electronic device, wherein the second identity is an identity of the second electronic device; and
broadcasting the first group identifier and a member list of the first group, wherein the member list comprises the first identity and the second identity.

11. The method according to claim 9 or 10, wherein the method further comprises:
displaying the sixth information and the second identity when receiving a sixth acoustic wave signal sent by the second electronic device, wherein the sixth acoustic wave signal carries the sixth information, the first group identifier, and the second identity; and
skipping displaying the seventh information when receiving a seventh acoustic wave signal sent by a third electronic device, wherein the seventh sound carries the seventh information and a third identity, the third identity is an identity of the third electronic device, and the third electronic device does not belong to the first group.

12. The method according to any one of claims 1 to 11, wherein the method further comprises:
sending an eighth acoustic wave signal at a first moment when the first electronic device is underwater, wherein the eighth acoustic wave signal carries the first identity and the first moment;
receiving, at a second moment, a ninth acoustic wave signal sent by the second electronic device, wherein the ninth acoustic wave signal is an acoustic wave signal sent by the second electronic device when the second electronic device receives the eighth acoustic wave signal, and the ninth acoustic wave signal carries a transmission moment of the ninth acoustic wave signal and the second identity of the second electronic device; and
in response to the ninth acoustic wave signal, outputting distance information based on the transmission moment of the ninth acoustic wave signal and the second moment, wherein the distance information indicates a distance between the first electronic device and the second electronic device.

13. The method according to any one of claims 1 to 11, wherein the method further comprises:
sending an eighth acoustic wave signal at a first moment when the first electronic device is underwater, wherein the eighth acoustic wave signal carries the first identity;
receiving, at a second moment, a ninth acoustic wave signal sent by the second electronic device, wherein the ninth acoustic wave signal is an acoustic wave signal sent by the second electronic device when the second electronic device receives the eighth acoustic wave signal, and the ninth acoustic wave signal carries the second identity of the second electronic device;
sending a tenth acoustic wave signal at a third moment, wherein the tenth acoustic wave signal carries the first identity;
receiving, at a fourth moment, an eleventh acoustic wave signal sent by the second electronic device, wherein the eleventh acoustic wave signal is an acoustic wave signal sent by the second electronic device when the second electronic device receives the tenth acoustic wave signal, and the eleventh acoustic wave signal carries the second identity of the second electronic device; and
outputting a distance prompt based on a first time interval and a second time interval, wherein the distance prompt prompts the user with a change of a distance between the first electronic device and the second electronic device, the first time interval is a time interval between the first moment and the second moment, and the second time interval is a time interval between the third moment and the fourth moment.

14. The method according to claim 13, wherein outputting the distance prompt based on the first time interval and the second time interval specifically comprises:
outputting a first distance prompt when the first time interval is greater than the second time interval, wherein the first distance prompt indicates to the user that the distance between the first electronic device and the second electronic device decreases; and
outputting a second distance prompt when the first time interval is less than the second time interval, wherein the second distance prompt indicates to the user that the distance between the first electronic device and the second electronic device increases.

15. The method according to any one of claims 1 to 14, wherein the method further comprises:
displaying a first prompt before receiving the first operation, wherein the first prompt indicates to the user that no identity is set for the first electronic device; and
receiving the first operation of the user, and in response to the first operation, setting the identity of the first electronic device to the first identity specifically comprises:
receiving the first operation of the user, and in response to the first operation, displaying a second prompt, wherein the second prompt indicates to the user that the identity of the first electronic device is the first identity.

16. An underwater communication method, applied to a buoy device, wherein the buoy device stores first location information, and the first location information indicates a location of the buoy device; and the method comprises:
receiving, at a fifth moment, a twelfth acoustic wave signal sent by a first electronic device from underwater, wherein the twelfth acoustic wave signal carries a first identity of the first electronic device and a first transmission moment, and the first transmission moment is a transmission moment of the twelfth acoustic wave signal;
determining second location information based on the fifth moment, the first transmission moment, and the first location information, wherein the second location information indicates a location of the first electronic device; and
sending a first radio signal to a second electronic device that does not enter water, wherein the first radio signal comprises the second location information.

17. The method according to claim 16, wherein the method further comprises:
sending a thirteenth acoustic wave signal to the first electronic device after determining the second location information, wherein the thirteenth acoustic wave signal carries the second location information.

18. An electronic device, wherein the electronic device is a first electronic device, and comprises one or more processors, one or more memories, a display, and a sound-making module, the one or more memories are coupled to the one or more processors, the one or more memories are configured to store computer program code, the computer program code comprises computer instructions, and when the one or more processors execute the computer instructions, the first electronic device is caused to perform the method according to any one of claims 1 to 15.

19. The method according to claim 18, wherein the sound-making module is attached to a rear housing of the first electronic device, and the sound-making module is configured to drive the rear housing to vibrate and send an acoustic wave signal.

20. A computer-readable storage medium, comprising computer instructions, wherein when the computer instructions are run on a first electronic device, the first electronic device is caused to perform the method according to any one of claims 1 to 15.

21. An electronic device, wherein the electronic device is a buoy device, and comprises one or more memories, the one or more memories are coupled to the one or more processors, the one or more memories are configured to store computer program code, the computer program code comprises computer instructions, and when the one or more processors execute the computer instructions, the first electronic device is caused to perform the method according to claim 16 or 17.

22. A computer-readable storage medium, comprising computer instructions, wherein when the computer instructions are run on a first electronic device, the first electronic device is caused to perform the method according to claim 16 or 17.
